(19) Europäisches Patentamt
European Patent Office
Office européen des brevets

(11) EP 2 899 249 B1

(12) # EUROPEAN PATENT SPECIFICATION

(45) Date of publication and mention of the grant of the patent:
**17.10.2018 Bulletin 2018/42**

(21) Application number: **13839209.7**

(22) Date of filing: **06.09.2013**

(51) Int Cl.:
***C09K 19/30*** *(2006.01)* ***C09K 19/12*** *(2006.01)*
***C09K 19/14*** *(2006.01)* ***C09K 19/20*** *(2006.01)*
***C09K 19/32*** *(2006.01)* ***C09K 19/34*** *(2006.01)*
***C09K 19/42*** *(2006.01)* ***G02F 1/13*** *(2006.01)*
***C09K 19/02*** *(2006.01)* ***C09K 19/44*** *(2006.01)*
***G02F 1/00*** *(2006.01)* ***C09K 19/04*** *(2006.01)*

(86) International application number:
**PCT/JP2013/074094**

(87) International publication number:
**WO 2014/045905 (27.03.2014 Gazette 2014/13)**

(54) **LIQUID CRYSTAL DISPLAY ELEMENT**

FLÜSSIGKRISTALLANZEIGEELEMENT

ELÉMENT D'AFFICHAGE À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2012 JP 2012209169**

(43) Date of publication of application:
**29.07.2015 Bulletin 2015/31**

(73) Proprietors:
- **JNC Corporation**
  **Chiyoda-ku**
  **Tokyo 100-8105 (JP)**
- **JNC Petrochemical Corporation**
  **Tokyo 100-0004 (JP)**

(72) Inventors:
- **FURUSATO Yoshimasa**
  **Ichihara-shi**
  **Chiba 290-8551 (JP)**
- **MATSUMURA Yoshinari**
  **Ichihara-shi**
  **Chiba 290-8551 (JP)**
- **HIRAOKA Takashi**
  **Ichihara-shi**
  **Chiba 290-8551 (JP)**
- **ASAKURA Toshiki**
  **Ichihara-shi**
  **Chiba 290-8551 (JP)**
- **SAIGUSA Kazuhiko**
  **Ichihara-shi**
  **Chiba 290-8551 (JP)**

(74) Representative: **Thurston, Joanna**
**Withers & Rogers LLP**
**4 More London Riverside**
**London SE1 2AU (GB)**

(56) References cited:
**EP-A1- 2 292 720** **EP-A1- 2 484 658**
**EP-A2- 2 628 779** **WO-A1-2008/138643**
**WO-A1-2010/017868** **JP-A- 2002 156 619**
**JP-A- 2004 269 886** **JP-A- 2005 163 047**
**JP-A- 2006 503 130** **JP-A- 2008 202 049**
**JP-A- 2011 515 506** **US-A1- 2004 055 529**
**US-B1- 6 440 506**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## Technical Field

The invention relates to a liquid crystal composition mainly suitable for use in an active matrix (AM) device and so forth, and an AM device including the composition and so forth. In particular, the invention relates to a liquid crystal composition having a positive dielectric anisotropy, and to a device including the composition and having a mode such as a twisted nematic (TN) mode, an electrically controlled birefringence (ECB) mode, an optically compensated bend (OCB) mode, an in-plane switching (IPS) mode, a fringe field switching (FFS) mode or a polymer sustained alignment (PSA) mode or a field induced photo-reactive alignment (FPA) mode.

## Background Art

In a liquid crystal display device, a classification based on an operating mode for liquid crystals includes a phase change (PC) mode, a twisted nematic (TN) mode, a super twisted nematic (STN) mode, an electrically controlled birefringence (ECB) mode, an optically compensated bend (OCB) mode, an in-plane switching (IPS) mode, a vertical alignment (VA) mode, a fringe field switching (FFS) mode, a polymer sustained alignment (PSA) mode and a field induced photo-reactive alignment (FPA) mode. A classification based on a driving mode in the device includes a passive matrix (PM) and an active matrix (AM). The PM is classified into static, multiplex and so forth, and the AM is classified into a thin film transistor (TFT), a metal insulator metal (MIM) and so forth. The TFT is further classified into amorphous silicon and polycrystal silicon. The latter is classified into a high temperature type and a low temperature type according to a production process. A classification based on a light source includes a reflective type utilizing natural light, a transmissive type utilizing backlight and a transflective type utilizing both the natural light and the backlight.

The devices include a liquid crystal composition having suitable characteristics. The liquid crystal composition has a nematic phase. General characteristics of the composition should be improved to obtain an AM device having good general characteristics. Table 1 below summarizes a relationship of the general characteristics between two aspects. The general characteristics of the composition will be further described based on a commercially available AM device. A temperature range of the nematic phase relates to a temperature range in which the device can be used. A preferred maximum temperature of the nematic phase is about 70°C or higher and a preferred minimum temperature of the nematic phase is about -10°C or lower. Viscosity of the composition relates to a response time in the device. A short response time is preferred for displaying moving images on the device. Accordingly, a small viscosity in the composition is preferred. A small viscosity at a low temperature is further preferred. An elastic constant of the composition relates to contrast in the device. In order to increase the contrast in the device, a large elastic constant in the composition is further preferred.

Table 1. General Characteristics of Composition and AM Device

| No. | General Characteristics of Composition | General Characteristics of AM Device |
|---|---|---|
| 1 | Wide temperature range of a nematic phase | Wide usable temperature range |
| 2 | Small viscosity 1) | Short response time |
| 3 | Suitable optical anisotropy | Large contrast ratio |
| 4 | Large positive or negative dielectric anisotropy | Low threshold voltage and small electric power consumption<br>Large contrast ratio |
| 5 | Large specific resistance | Large voltage holding ratio and large contrast ratio |
| 6 | High stability to ultraviolet light and heat | Long service life |
| 7 | Large elastic constant | Large contrast ratio and short response time |
| 1) A liquid crystal composition can be injected into a liquid crystal cell in a shorter period of time. | | |

An optical anisotropy of the composition relates to a contrast ratio in the device. A product ($\Delta n \times d$) of the optical anisotropy ($\Delta n$) of the composition and a cell gap (d) in the device is designed so as to maximize the contrast ratio. A suitable value of the product depends on a type of the operating mode. In a device of the mode such as the TN

mode, a suitable value is about 0.45 micrometer. In the above case, a composition having a large optical anisotropy is preferred for a device having a small cell gap. A large dielectric anisotropy in the composition contributes to a low threshold voltage, a small electric power consumption and a large contrast ratio in the device. Accordingly, the large dielectric anisotropy is preferred. In the FFS mode, in particular, alignment of part of liquid crystal molecules does not become in parallel to a panel substrate due to an oblique electric field. Therefore, a larger dielectric constant (ε⊥) in a minor axis direction of the liquid crystal molecules is preferred in order to suppress tilt-up of the liquid crystal molecules. Transmittance of the device having the FFS mode can be increased by suppressing the tilt-up of the liquid crystal molecules, and therefore the dielectric anisotropy contributes to a large contrast ratio. A large specific resistance in the composition contributes to a large voltage holding ratio and a large contrast ratio in the device. Accordingly, a composition having a large specific resistance at room temperature and also at a temperature close to a maximum temperature of the nematic phase is preferred. A composition having a large specific resistance at room temperature and also at a temperature close to the maximum temperature of the nematic phase even after the device has been used for a long period of time is preferred. Stability of the composition to ultraviolet light and heat relates to a service life of the liquid crystal display device. In the case where the stability is high, the device has a long service life. Such characteristics are preferred in an AM device for use in a liquid crystal projector, a liquid crystal television and so forth. A large elastic constant in the composition contributes to a large contrast ratio and a short response time in the device. Therefore, a large elastic constant is preferred.

A composition having a positive dielectric anisotropy is used for an AM device having the TN mode. On the other hand, a composition having a negative dielectric anisotropy is used for an AM device having the VA mode. A composition having a positive or negative dielectric anisotropy is used for an AM device having the IPS mode or the FFS mode. A composition having a positive or negative dielectric anisotropy is used for an AM device having the PSA mode or the FPA mode. Examples of the liquid crystal composition having the positive dielectric anisotropy are disclosed in Patent literature Nos. 1 and 2 as described below.

## Citation List

### Patent Literature

Patent literature No. 1: JP 2000-080370 A.
Patent literature No. 2: JP 2005-163047 A.
Patent literature No. 3: EP 2628779 A2.
Patent literature No. 4: EP 2484658 A1.
Patent literature No. 5: WO 2010/017868 A1.
Patent literature No. 6: US 2004/055529 A1.
Patent literature No. 7: EP 2292720 A1.
Patent literature No. 8: US 6,440,506 B1.
Patent literature No. 9: WO 2008/138643 A1.
Patent literature No. 10: WO 2004/035710 A1.
Patent literature No. 11: JP 2002-156619 A.
Patent literature No. 12: DE 10 2004 006669 A1.

Patent literature numbers 3 to 10 describe liquid crystal compounds containing dioxanes. Patent literature numbers 11 and 12 describe liquid crystal compounds containing difluorinated aryls.

A desirable AM device has characteristics such as a wide temperature range in which a device can be used, a short response time, a large contrast ratio, a low threshold voltage, a large voltage holding ratio and a long service life. A shorter response time even by one millisecond is desirable. Thus, desirable characteristics of a composition include a high maximum temperature of a nematic phase, a low minimum temperature of the nematic phase, a small viscosity, a suitable optical anisotropy, a large dielectric anisotropy, a large dielectric anisotropy in a minor axis direction of liquid crystal molecules, a large specific resistance, a high stability to ultraviolet light, a high stability to heat and a large elastic constant.

## Summary of Invention

### Technical Problem

One of the aims of the invention is to provide a liquid crystal composition satisfying at least one of characteristics

such as a high maximum temperature of a nematic phase, a low minimum temperature of the nematic phase, a small viscosity, a suitable optical anisotropy, a large dielectric anisotropy, a large dielectric anisotropy in a minor axis direction of liquid crystal molecules, a large specific resistance, a high stability to ultraviolet light, a high stability to heat and a large dielectric constant. Another aim is to provide a liquid crystal composition having a suitable balance regarding at least two of the characteristics. Another aim is to provide a liquid crystal display device including such a composition. A further aim is to provide a composition having a suitable optical anisotropy, a large dielectric anisotropy, a high stability to ultraviolet light, a large elastic constant and so forth, and an AM device having a short response time, a large voltage holding ratio, a large contrast ratio, a long service life and so forth.

**Solution to Problem**

A liquid crystal display device including a pair of substrates at least one of which is transparent, and having an alignment layer including a liquid crystal composition having a positive dielectric anisotropy as interposed between the substrates, a polarizing plate and transparent electrodes, wherein the liquid crystal composition contains at least one compound selected from the group of compounds represented by formula (1) as a first component, and at least one compound selected from the group of compounds represented by formula (2) as a second component, wherein the first component contains at least one compound selected from the group of compounds represented by formula (1-4) and formula (1-8) :

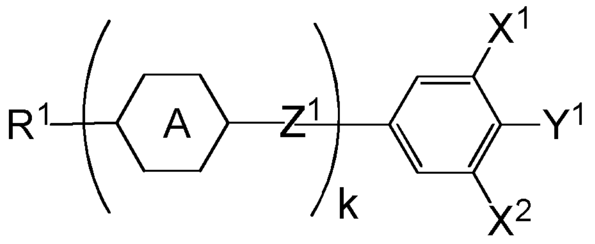

(1)

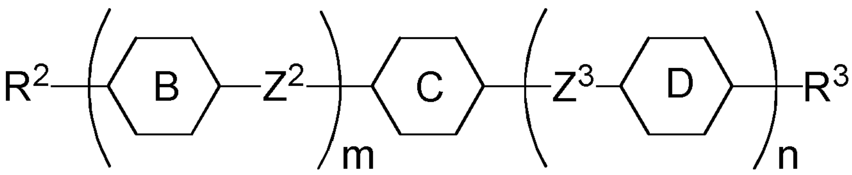

(2)

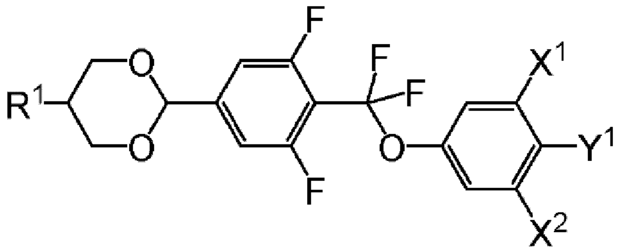

(1-4)

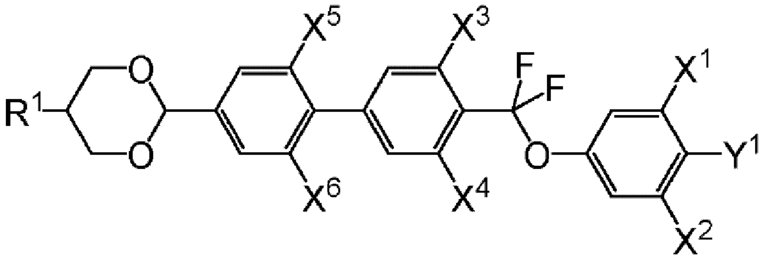

(1-8)

wherein, $R^1$ is alkyl having 1 to 12 carbons, alkoxy having 1 to 12 carbons or alkenyl having 2 to 12 carbons; $R^2$ and $R^3$ are independently alkyl having 1 to 12 carbons, alkoxy having 1 to 12 carbons, alkenyl having 2 to 12 carbons or alkenyloxy having 2 to 12 carbons; ring A is 1,4-cyclohexylene, 1,4-phenylene, 2-fluoro-1,4-phenylene, 3-fluoro-1,4-phenylene, 3,5-difluoro-1,4-phenylene, pyrimidine-2,5-diyl, 1,3-dioxane-2,5-diyl or tetrahydropyran-2,5-diyl; ring B and ring D are independently 1,4-cyclohexylene, tetrahydropyran-2,5-diyl, 1,4-phenylene, or 1,4-phenylene in which at least one of hydrogen is replaced by fluorine or chlorine; ring C is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl; $X^1$, $X^2$, $X^3$, $X^4$, $X^5$ and $X^6$ are independently hydrogen or fluorine; $Y^1$ is fluorine, chlorine, trifluoromethyl or trifluoromethoxy; $Z^1$ is a single bond, ethylene, carbonyloxy or difluoromethyleneoxy; $Z^2$ and $Z^3$ are independently a single bond, ethylene, methyleneoxy or carbonyloxy; k is 1, 2 or 3; m is 1, 2 or 3; and n is 0 or 1, and a sum of m and n is 3 or less.

## Advantageous Effects of Invention

An advantage of the invention is a liquid crystal composition satisfying at least one of characteristics such as a high maximum temperature of a nematic phase, a low minimum temperature of the nematic phase, a small viscosity, a suitable optical anisotropy, a large dielectric anisotropy, a large dielectric anisotropy in a minor axis direction of liquid crystal molecules, a large specific resistance, a high stability to ultraviolet light and a high stability to heat. One aspect of the invention is a liquid crystal composition having a suitable balance regarding at least two of the characteristics. Another aspect is a liquid crystal display device including such a composition. A further aspect is a composition having a suitable optical anisotropy, a large dielectric anisotropy, a high stability to ultraviolet light and so forth, and an AM device having a short response time, a large voltage holding ratio, a large contrast ratio, a long service life and so forth.

Usage of terms herein is as described below. A liquid crystal composition or a liquid crystal display device of the invention may be occasionally abbreviated as "composition" or "device, " respectively. The Liquid crystal display device is a generic term for a liquid crystal display panel and a liquid crystal display module. "Liquid crystal compound" means a compound having a liquid crystal phase such as a nematic phase or a smectic phase, or a compound having no liquid crystal phase but being useful as a component of the composition. Such a useful compound has a six-membered ring such as 1,4-cyclohexylene and 1,4-phenylene, and a rod-like molecular structure. An optically active compound or a polymerizable compound may be occasionally added to the composition. Even in the case where the compounds are liquid crystalline, the compounds are classified as an additive herein. At least one compound selected from the group of compounds represented by formula (1) may be occasionally abbreviated as "compound (1)." "Compound (1)" means one compound or two or more compounds represented by formula (1). A same rule applies to any other compound represented by any other formula. "At least one" in the context of "replaced" means that not only a position but also the number thereof may be selected without limitation.

A maximum temperature of the nematic phase may be occasionally abbreviated as "maximum temperature." A minimum temperature of the nematic phase may be occasionally abbreviated as "minimum temperature." An expression "having a large specific resistance" means that the composition has a large specific resistance at room temperature and also at a temperature close to the maximum temperature of the nematic phase in an initial stage, and that the composition has a large specific resistance at room temperature and also at a temperature close to the maximum temperature of the nematic phase even after the device has been used for a long period of time. An expression "having a large voltage holding ratio" means that the device has a large voltage holding ratio at room temperature and also at a temperature close to the maximum temperature of the nematic phase in an initial stage, and that the device has a large voltage holding ratio at room temperature and also at a temperature close to the maximum temperature of the nematic phase even after the device has been used for a long period of time. When characteristics such as optical anisotropy are described, values obtained according to the measuring methods described in Examples will be used. A first component includes one compound or two or more compounds. "Ratio of the first component" is expressed in terms of weight percent (% by weight) of the first component based on the total weight of the liquid crystal composition. A ratio of a second component and so forth is expressed in a similar manner. A ratio of the additive mixed with the composition is expressed in terms of weight percent (% by weight) or weight parts per million (ppm) based on the total weight of the liquid crystal composition.

A symbol $R^1$ is used for a plurality of compounds in chemical formulas of component compounds. In two arbitrary compounds among the plurality of compounds, groups to be selected by $R^1$ may be identical or different. In one case, for example, $R^1$ of compound (1) is ethyl and $R^1$ of compound (1-1) is ethyl. In another case, $R^1$ of compound (1) is ethyl and $R^1$ of compound (1-1) is propyl. A same rule also applies to a symbol $R^2$, $X^1$ or the like.

The invention includes items described below.

Item 1. A liquid crystal display device comprising a pair of substrates at least one of which is transparent, and having an alignment layer including a liquid crystal composition having a positive dielectric anisotropy as interposed between the substrates, a polarizing plate and transparent electrodes, wherein the liquid crystal composition contains at least one compound selected from the group of compounds represented by formula (1) as a first component, and at least one compound selected from the group of compounds represented by formula (2) as a second component, wherein the first component contains at least one compound selected from the group of compounds represented by formula

(1-4) and formula (1-8):

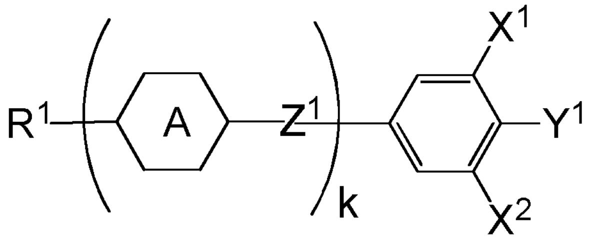

(1)

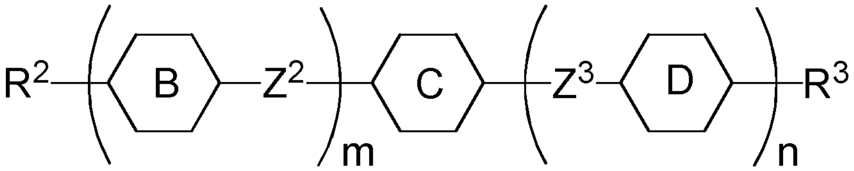

(2)

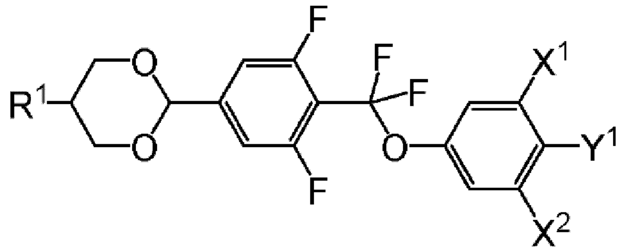

(1-4)

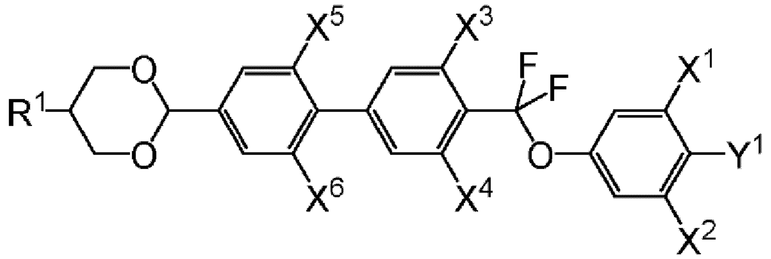

(1-8)

wherein, $R^1$ is alkyl having 1 to 12 carbons, alkoxy having 1 to 12 carbons or alkenyl having 2 to 12 carbons; $R^2$ and $R^3$ are independently alkyl having 1 to 12 carbons, alkoxy having 1 to 12 carbons, alkenyl having 2 to 12 carbons or alkenyloxy having 2 to 12 carbons; ring A is 1,4-cyclohexylene, 1,4-phenylene, 2-fluoro-1,4-phenylene, 3-fluoro-1,4-phenylene, 3,5-difluoro-1,4-phenylene, pyrimidine-2,5-diyl, 1,3-dioxane-2,5-diyl or tetrahydropyran-2,5-diyl; ring B and ring D are independently 1,4-cyclohexylene, tetrahydropyran-2,5-diyl, 1,4-phenylene, or 1,4-phenylene in which at least one of hydrogen is replaced by fluorine or chlorine; ring C is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7, 8-difluorochroman-2, 6-diyl; $X^1$, $X^2$, $X^3$, $X^4$, $X^5$ and $X^6$ are independently hydrogen or fluorine; $Y^1$ is fluorine, chlorine, trifluoromethyl or trifluoromethoxy; $Z^1$ is a single bond, ethylene, carbonyloxy or difluoromethyleneoxy; $Z^2$ and $Z^3$ are independently a single bond, ethylene, methyleneoxy or carbonyloxy; k is 1, 2 or 3; m is 1, 2 or 3; and n is 0 or 1, and a sum of m and n is 3 or less.

Item 2. The liquid crystal display device according to item 1, including at least one compound selected from the group of compounds represented by formula (1-1) to formula (1-3), formula (1-5) to formula (1-7) and formula (1-9) to formula (1-18) as the first component of the liquid crystal composition:

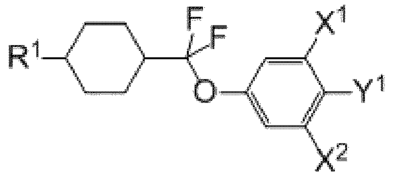

(1-1)

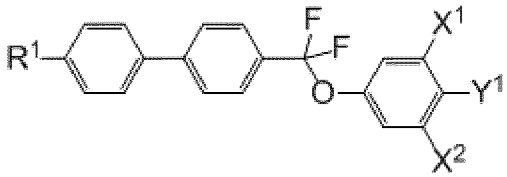

(1-2)

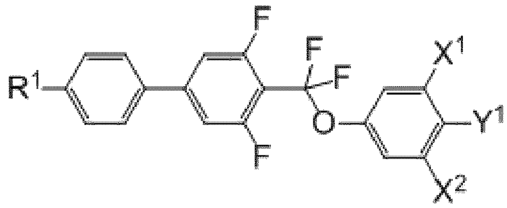

(1-3)

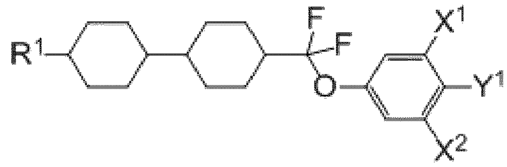

(1-5)

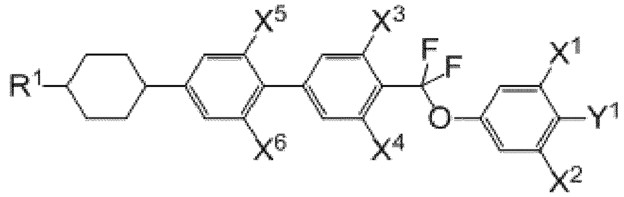

(1-6)

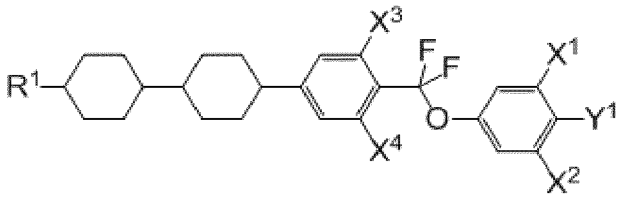

(1-7)

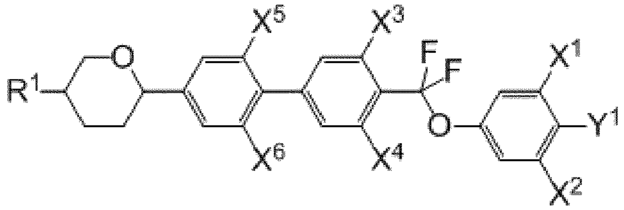

(1-9)

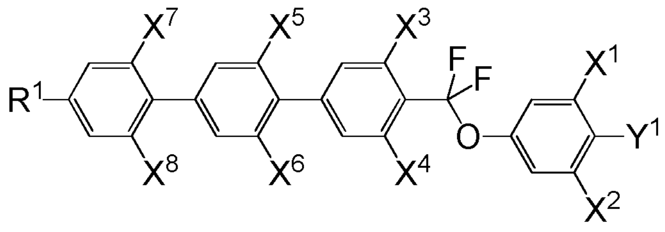

(1-10)

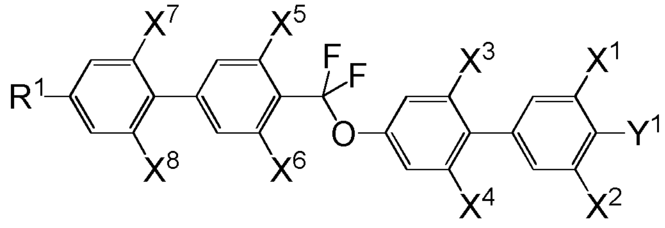

(1-11)

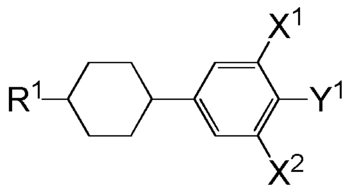

(1-12)

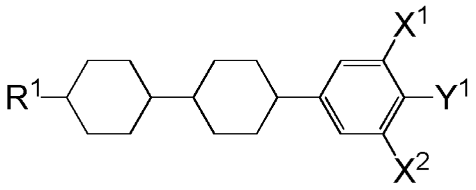

(1-13)

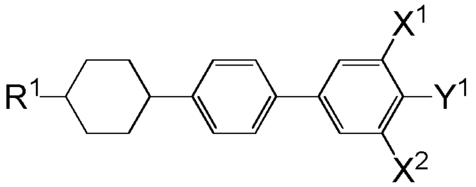

(1-14)

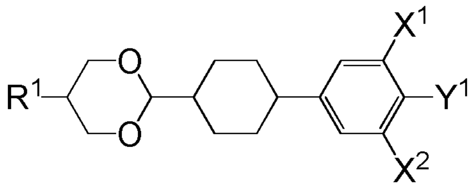

(1-15)

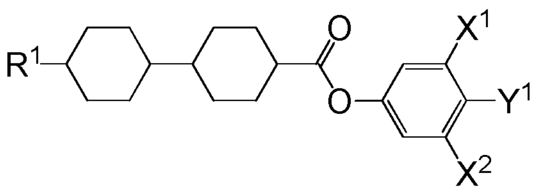

(1-16)

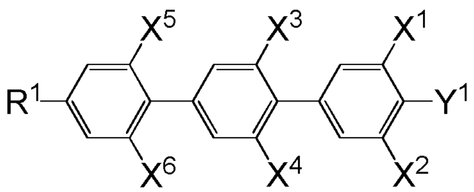

(1-17)

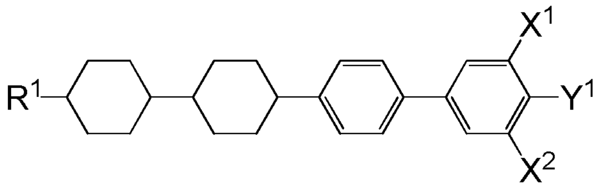

(1-18)

wherein, $R^1$ is alkyl having 1 to 12 carbons, alkoxy having 1 to 12 carbons, or alkenyl having 2 to 12 carbons; $X^1$, $X^2$, $X^3$, $X^4$, $X^5$, $X^6$, $X^7$ and $X^8$ are independently hydrogen or fluorine; and $Y^1$ is fluorine, chlorine, trifluoromethyl or trifluoromethoxy.

Item 3. The liquid crystal display device according to item 1 or 2, including at least one compound selected from the group of compounds represented by formula (1-10) according to item 2 as the first component of the liquid crystal composition.

Item 4. The liquid crystal display device according to any one of items 1 to 3, including at least one compound selected from the group of compounds represented by formula (2-1) to formula (2-19) as the second component of the liquid crystal composition:

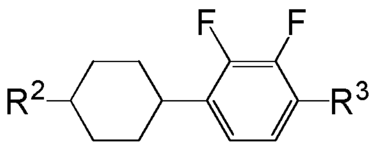

(2-1)

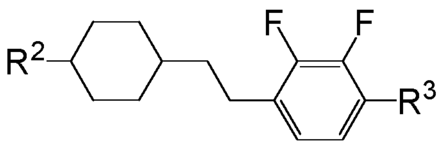

(2-2)

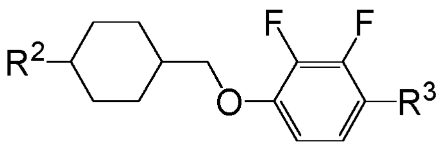

(2-3)

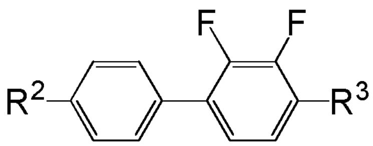

(2-4)

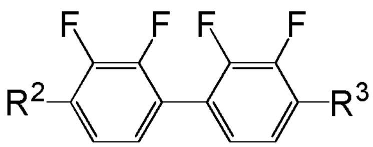

(2-5)

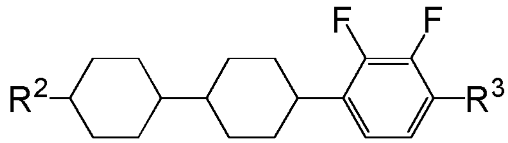

(2-6)

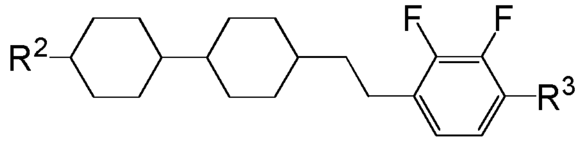

(2-7)

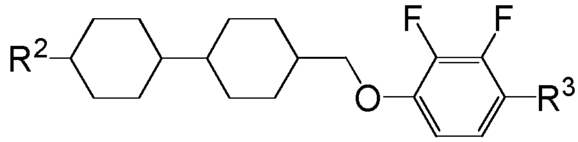

(2-8)

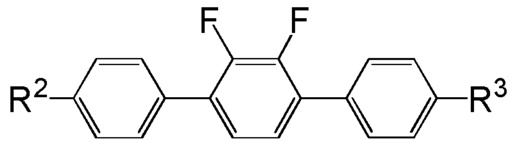

(2-9)

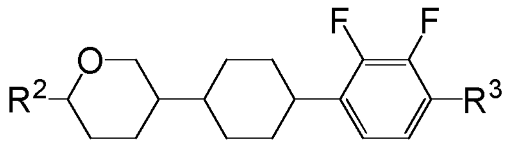

(2-10)

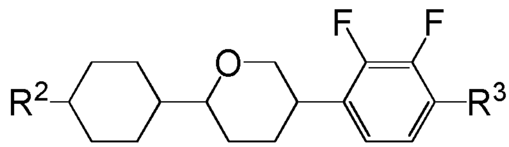

(2-11)

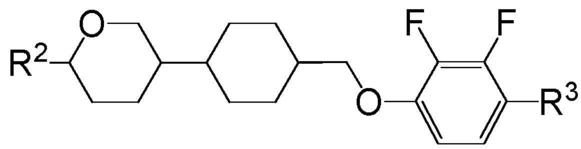

(2-12)

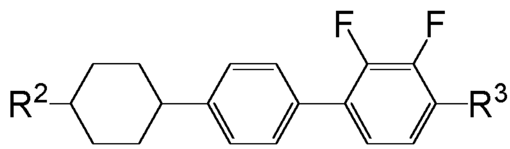

(2-13)

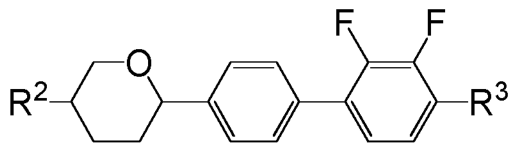

(2-14)

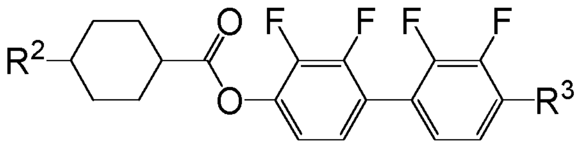

(2-15)

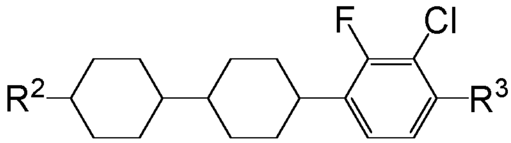

(2-16)

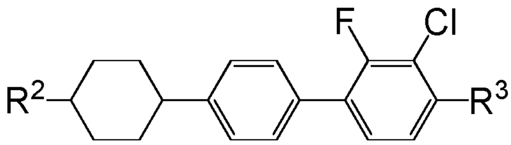

(2-17)

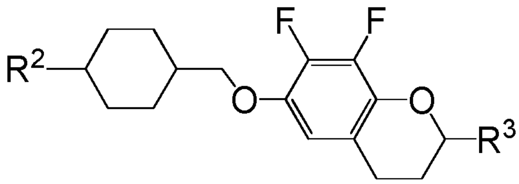

(2-18)

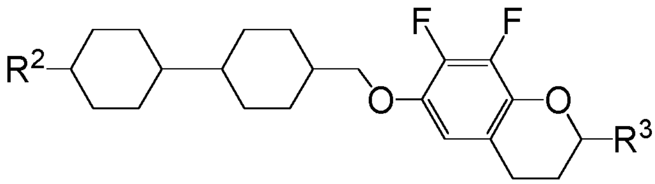

(2-19)

wherein, $R^2$ and $R^3$ are independently alkyl having 1 to 12 carbons, alkoxy having 1 to 12 carbons, alkenyl having 2 to 12 carbons or alkenyloxy having 2 to 12 carbons.

Item 5. The liquid crystal display device according to any one of items 1 to 4, wherein the liquid crystal composition has a ratio of the first component in the range of 5% by weight to 95% by weight and a ratio of the second component in the range of 5% by weight to 50% by weight, based on the total weight of the liquid crystal composition.

Item 6. The liquid crystal display device according to any one of items 1 to 5, further including at least one compound selected from the group of compounds represented by formula (3) as a third component of the liquid crystal composition:

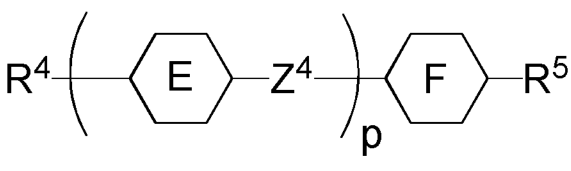

(3)

wherein, $R^4$ and $R^5$ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine; ring E and ring F are independently 1,4-cyclohexylene, 1,4-phenylene, 2-fluoro-1,4-phenylene, 3-fluoro-1,4-phenylene or 2,5-difluoro-1,4-phenylene; $Z^4$ is a single bond, ethylene or carbonyloxy; and p is 1, 2 or 3.

Item 7. The liquid crystal display device according to any one of items 1 to 6, including at least one compound selected from the group of compounds represented by formula (3-1) to formula (3-13) as the third component of the liquid crystal composition:

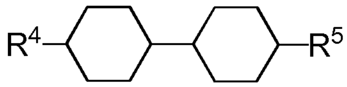 (3-1)

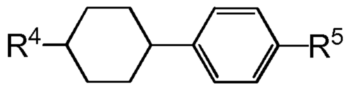 (3-2)

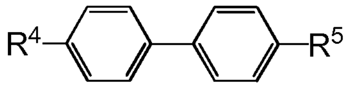 (3-3)

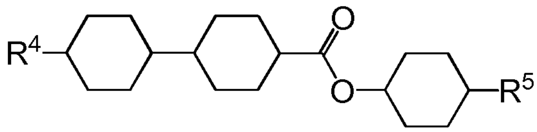 (3-4)

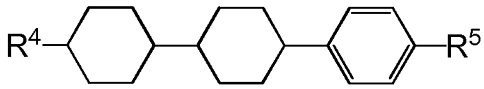 (3-5)

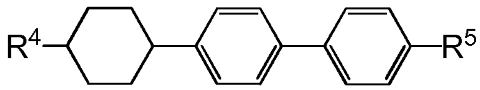 (3-6)

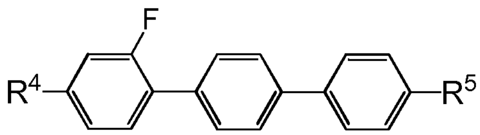 (3-7)

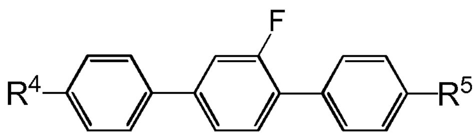 (3-8)

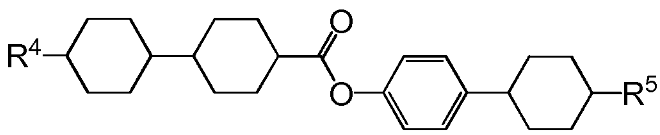 (3-9)

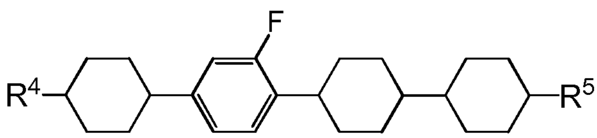 (3-10)

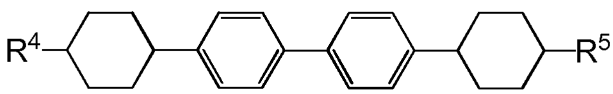 (3-11)

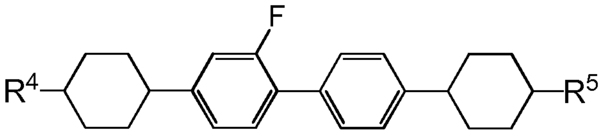

(3-12)

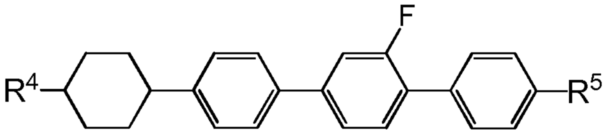

(3-13)

wherein, $R^4$ and $R^5$ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine.

Item 8. The liquid crystal display device according to any one of items 6 or 7, wherein the liquid crystal composition has a ratio of the third component in the range of 10% by weight to 90% by weight based on the total weight of the liquid crystal composition.

Item 9. The liquid crystal display device according to any one of items 1 to 8, wherein an operating mode of the liquid crystal display device includes an FFS mode, and a driving mode of the liquid crystal display device includes an active matrix mode.

Item 10. The liquid crystal display device according to any one of items 1 to 9, wherein the operating mode of the liquid crystal display device includes a TN mode, an ECB mode, an OCB mode, an IPS mode, a PSA mode or an FPA mode, and the driving mode of the liquid crystal display device includes an active matrix mode.

Item 11. A liquid crystal composition included in the liquid crystal display device according to any one of items 1 to 10.

Item 12. The liquid crystal composition according to item 11, wherein a maximum temperature of a nematic phase is 70 °C or more, optical anisotropy measured (at 25°C) at a wavelength of 589 nanometers is 0.07 or more and dielectric anisotropy measured (at 25°C) at a frequency of 1 kHz is 2 or more.

Item 13. The liquid crystal composition according to item 11 or 12, wherein dielectric constant in a minor axis direction of liquid crystal molecules as measured (at 25°C) at a frequency of 1 kHz is 3.5 or more.

Item 14. Use of the liquid crystal composition according to any one of items 11 to 13 in a liquid crystal display device.

The invention further includes the following items: (1) the composition, further containing an optically active compound; (2) the composition, further containing an additive such as an antioxidant, an ultraviolet light absorber, an antifoaming agent, a polymerizable compound or a polymerization initiator; (3) an AM device including the composition; (4) a device including the composition, and having a TN, ECB, OCB, IPS, FFS, PSA or FPA mode; (5) a transmissive device including the composition; (6) use of the composition as a composition having the nematic phase; and (7) use as an optically active composition by adding the optically active compound to the composition.

The composition of the invention will be described in the following order. First, a constitution of the component compounds in the composition will be described. Second, main characteristics of the component compounds and main effects of the compounds on the composition will be described. Third, a combination of components in the composition, a preferred ratio of the component compounds and the basis

Item 20. A liquid crystal composition included in the liquid crystal display device according to any one of items 1 to 19.

Item 21. The liquid crystal composition according to item 20, wherein a maximum temperature of a nematic phase is 70 °C or more, optical anisotropy measured (at 25°C) at a wavelength of 589 nanometers is 0.07 or more and dielectric anisotropy measured (at 25°C) at a frequency of 1 kHz is 2 or more.

Item 22. The liquid crystal composition according to item 20 or 21, wherein dielectric constant in a minor axis direction of liquid crystal molecules as measured (at 25°C) at a frequency of 1 kHz is 3.5 or more.

Item 23. Use of the liquid crystal composition according to any one of items 20 to 22 in a liquid crystal display device.

The invention further includes the following items: (1) the composition, further containing an optically active compound; (2) the composition, further containing an additive such as an antioxidant, an ultraviolet light absorber, an antifoaming agent, a polymerizable compound or a polymerization initiator; (3) an AM device including the composition; (4) a device including the composition, and having a TN, ECB, OCB, IPS, FFS, PSA or FPA mode; (5) a transmissive device including the composition; (6) use of the composition as a composition having the nematic phase; and (7) use as an optically active composition by adding the optically active compound to the composition.

The composition of the invention will be described in the following order. First, a constitution of the component compounds in the composition will be described. Second, main characteristics of the component compounds and main effects of the compounds on the composition will be described. Third, a combination of components in the composition, a preferred ratio of the component compounds and the basis thereof will be described. Fourth, a preferred embodiment of the component compounds will be described. Fifth, specific examples of the component compounds will be shown. Sixth, an additive that may be mixed with the composition will be described. Seventh, methods for synthesizing the component compounds will be described. Eighth, an application of the composition will be described. Last, a member used for the liquid crystal display device will be described.

First, the constitution of the component compounds in the composition will be described. The composition of the invention is classified into composition A and composition B. Composition A may further contain any other liquid crystal compound, an additive, an impurity or the like in addition to the liquid crystal compound selected from compound (1), compound (2) and compound (3). "Any other liquid crystal compound" means a liquid crystal compound different from compound (1), compound (2) and compound (3). Such a compound is mixed with the composition for the purpose of further adjusting the characteristics. The additive includes the optically active compound, the antioxidant, the ultraviolet light absorber, a dye, the antifoaming agent, the polymerizable compound and the polymerization initiator. The impurity includes a compound mixed in a process such as preparation of the component compounds. Even in the case where the compound is liquid crystalline, the compound is classified as the impurity herein.

Composition B consists essentially of compounds selected from the group of compound (1), compound (2) and compound (3). A term "essentially" means that the composition may contain the additive and the impurity, but does not contain any liquid crystal compound different from the above compounds. Composition B has a smaller number of components than composition A has. Composition B is preferred to composition A in view of cost reduction. Composition A is preferred to composition B in view of possibility of further adjusting physical properties by mixing any other liquid crystal compound.

Second, the main characteristics of the component compounds and the main effects of the compounds on the characteristics of the composition will be described. The main characteristics of the component compounds are summarized in Table 2 on the basis of advantageous effects of the invention. In Table 2, a symbol L stands for "large" or "high," a symbol M stands for "medium," and a symbol S stands for "small" or "low." The symbols L, M and S represent classification based on a qualitative comparison among the component compounds, and 0 (zero) means "a value is nearly zero."

Table 2. Characteristics of Compounds

| Compounds | Compound (1) | Compound (2) | Compound (3) |
|---|---|---|---|
| Maximum Temperature | S to M | S to L | S to L |
| Viscosity | M to L | M to L | S to M |
| Optical Anisotropy | M to L | M to L | S to L |
| Dielectric Anisotropy | S to L | M to L[1)] | 0 |
| Specific Resistance | L | L | L |

1) A value of dielectric anisotropy is negative, and the symbol shows magnitude of an absolute value.

Upon mixing the component compounds with the composition, the main effects of the component compounds on the characteristics of the composition are as described below. Compound (1) increases the dielectric anisotropy and decreases the minimum temperature. Compound (2) increases the dielectric constant in the minor axis direction of the liquid crystal molecules, and decreases the minimum temperature. Compound (3) increases the maximum temperature or decreases the viscosity.

Third, the combination of components in the composition, the preferred ratio of the component compounds and the basis thereof will be described. The combination of the components in the composition includes a combination of

the first component and the second component, and a combination of the first component, the second component and the third component. A preferred combination of components in the composition includes the combination of the first component, the second component and the third component.

A preferred ratio of the first component is about 5% by weight or more for increasing the dielectric anisotropy, and about 95% by weight or less for decreasing the minimum temperature. A further preferred ratio is in the range of about 10% by weight to about 80% by weight. A particularly preferred ratio is in the range of about 15% by weight to about 70% by weight.

A preferred ratio of the second component is about 5% by weight or more for increasing the dielectric constant in the minor axis direction of the liquid crystal molecules, and about 50% by weight or less for decreasing the minimum temperature. A further preferred ratio is in the range of about 10% by weight to about 40% by weight. A particularly preferred ratio is in the range of about 10% by weight to about 30% by weight.

A preferred ratio of the third component is about 10% by weight or more for decreasing the viscosity, and about 90% by weight or less for decreasing the minimum temperature. A further preferred ratio is in the range of about 15% by weight to about 85% by weight. A particularly preferred ratio is in the range of about 20% by weight to about 80% by weight.

Fourth, the preferred embodiment of the component compounds will be described. $R^1$ is alkyl having 1 to 12 carbons, alkoxy having 1 to 12 carbons or alkenyl having 2 to 12 carbons. Preferred $R^1$ is alkyl having 1 to 12 carbons for increasing the stability to ultraviolet light or the stability to heat. $R^2$ and $R^3$ are independently alkyl having 1 to 12 carbons, alkoxy having 1 to 12 carbons, alkenyl having 2 to 12 carbons or alkenyloxy having 2 to 12 carbons. Preferred $R^2$ or $R^3$ is alkyl having 1 to 12 carbons for increasing the stability to ultraviolet light or increasing the stability to heat, or the like, and alkoxy having 1 to 12 carbons for increasing the absolute value of dielectric anisotropy. $R^4$ and $R^5$ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine. Preferred $R^4$ or $R^5$ is alkenyl having 2 to 12 carbons for decreasing the viscosity, and alkyl having 1 to 12 carbons for increasing the stability to ultraviolet light or the stability to heat.

Preferred alkyl is methyl, ethyl, propyl, butyl, pentyl, hexyl, heptyl or octyl. Further preferred alkyl is ethyl, propyl, butyl, pentyl or heptyl for decreasing the viscosity.

Preferred alkoxy is methoxy, ethoxy, propoxy, butoxy, pentyloxy, hexyloxy or heptyloxy. Further preferred alkoxy is methoxy or ethoxy for decreasing the viscosity.

Preferred alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. Further preferred alkenyl is vinyl, 1-propenyl, 3-butenyl or 3-pentenyl for decreasing the viscosity. A preferred configuration of -CH=CH- in the alkenyl depends on a position of a double bond. In order to decrease the viscosity, trans is preferred in alkenyl such as 1-propenyl, 1-butenyl, 1-pentenyl, 1-hexenyl, 3-pentenyl and 3-hexenyl. Cis is preferred in the alkenyl such as 2-butenyl, 2-pentenyl and 2-hexenyl.

Preferred examples of alkenyl in which at least one of hydrogen is replaced by fluorine include 2,2-difluorovinyl, 3,3-difluoro-2-propenyl, 4,4-difluoro-3-butenyl, 5,5-difluoro-4-pentenyl and 6,6-difluoro-5-hexenyl. Further preferred examples include 2,2-difluorovinyl and 4,4-difluoro-3-butenyl for decreasing the viscosity.

Alkyl includes no cyclic alkyl. Alkoxy includes no cyclic alkoxy. Alkenyl includes no cyclic alkenyl. With regard to a configuration of 1,4-cyclohexylene, trans is preferred to cis for increasing the maximum temperature.

Ring A is 1,4-cyclohexylene, 1,4-phenylene, 2-fluoro-1,4-phenylene, 3-fluoro-1,4-phenylene, 3,5-difluoro-1,4-phenylene, pyrimidine-2,5-diyl, 1,3-dioxane-2,5-diyl or tetrahydropyran-2,5-diyl, and two of arbitrary ring A when k is 2 or 3 may be identical or different. Preferred ring A is 1,4-cyclohexylene for increasing the maximum temperature, 1,4-phenylene for increasing the optical anisotropy, and 3,5-difluoro-1,4-phenylene for increasing the dielectric anisotropy. Ring B and Ring D are independently 1,4-cyclohexylene, tetrahydropyran-2,5-diyl, 1,4-phenylene, or 1,4-phenylene in which at least one of hydrogen is replaced by fluorine or chlorine; and two of arbitrary ring B when m is 2 or 3 may be identical or different. Preferred ring B or Ring D is 1,4-cyclohexylene for decreasing the viscosity, tetrahydropyran-2,5-diyl for increasing the absolute value of dielectric anisotropy, and 1,4-phenylenefor increasing the optical anisotropy. Tetrahydropyran-2,5-diyl includes:

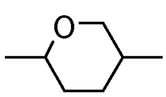

or

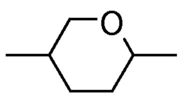

,

and preferably

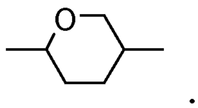

Ring C is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl. Preferred ring C is 2,3-difluoro-1,4-phenylene for decreasing the viscosity, 2-chloro-3-fluoro-l,4-phenylene for decreasing the optical anisotropy, or 7,8-difluorochroman-2,6-diyl for increasing the absolute value of dielectric anisotropy.

Ring E and ring F are independently 1,4-cyclohexylene, 1,4-phenylene, 2-fluoro-1,4-phenylene, 3-fluoro-1,4-phenylene or 2,5-difluoro-1,4-phenylene, and two of arbitrary ring E when p is 2 or 3 may be identical or different. Preferred ring E or ring F is 1,4-cyclohexylene for decreasing the viscosity, and 1,4-phenylene for increasing the optical anisotropy. Then, "2-fluoro-1,4-phenylene" or the like is expressed by a ring in which a left-hand side is defined as 1-position, and "2-fluoro-1,4-phenylene" and "3-fluoro-1,4-phenylene" show that positions of fluorine position are different.

$Z^1$ is a single bond, ethylene, carbonyloxy or difluoromethyleneoxy, and two of arbitrary $Z^1$ when k is 2 or 3 may be identical or different. Preferred $Z^1$ is a single bond for decreasing the viscosity, and difluoromethyleneoxy for increasing the dielectric anisotropy. $Z^2$ and $Z^3$ are independently a single bond, ethylene, methyleneoxy or carbonyloxy, and two of arbitrary $Z^2$ when m is 2 or 3 may be identical or different. Preferred $Z^2$ or $Z^3$ is a single bond for decreasing the viscosity, ethylene for decreasing the minimum temperature, and methyleneoxy for increasing the absolute value of dielectric anisotropy. $Z^4$ is a single bond, ethylene or carbonyloxy, and two of arbitrary $Z^4$ when p is 2 or 3 may be identical or different. Preferred $Z^4$ is a single bond for decreasing the viscosity, and carbonyloxy for increasing the maximum temperature.

$X^1$, $X^2$, $X^3$, $X^4$, $X^5$, $X^6$, $X^7$ and $X^8$ are independently hydrogen or fluorine. Preferred $X^1$, $X^2$, $X^3$, $X^4$, $X^5$, $X^6$, $X^7$ or $X^8$ is fluorine for increasing the dielectric anisotropy, and hydrogen for decreasing the viscosity.

$Y^1$ is fluorine, chlorine, trifluoromethyl or trifluoromethoxy. Preferred $Y^1$ is fluorine for decreasing the viscosity.

Then, k is 1, 2 or 3. Preferred k is 2 for decreasing the minimum temperature, and 3 for increasing the maximum temperature. Further, m is 1, 2 or 3. Preferred m is 1 for decreasing the viscosity, and 2 or 3 for increasing the maximum temperature. Then, n is 0 or 1. Preferred n is 0 for decreasing the viscosity, and 1 for decreasing the minimum temperature. Further, p is 1, 2 or 3. Preferred p is 1 for decreasing the viscosity, and 2 or 3 for increasing the maximum temperature.

Fifth, the specific examples of the component compounds will be shown. In the preferred compounds described below, $R^5$ is alkyl having 1 to 12 carbons, alkoxy having 1 to 12 carbons or alkenyl having 2 to 12 carbons, or alkenyl having 2 to 12 carbons in which at least one of hydrogen is replaced by fluorine. $R^6$ is straight-chain alkyl having 1 to 12 carbons or straight-chain alkenyl having 2 to 12 carbons. $R^7$ is straight-chain alkyl having 1 to 12 carbons or straight-chain alkoxy having 2 to 12 carbons . $R^8$ and $R^9$ are independently straight-chain alkyl having 1 to 12 carbons, straight-chain alkoxy having 1 to 12 carbons or straight-chain alkenyl having 2 to 12 carbons.

Preferred compound (1) includes compound (1-1-1) to compound (1-18-1). Further preferred compound (1) includes compound (1-2-1), compound (1-3-1), compound (1-4-1), compound (1-5-1), compound (1-6-1), compound (1-8-1), compound (1-10-1), compound (1-10-2), compound (1-17-1) and compound (1-17-2). Particularly preferred compound (1) includes compound (1-8-1), compound (1-10-1) and compound (1-17-1). Preferred compound (2) includes compound (2-1-1) to compound (2-19-1) . Further preferred compound (2) includes compound (2-1-1), compound (2-2-1), compound (2-3-1), compound (2-4-1), compound (2-6-1), compound (2-8-1), compound (2-9-1) and compound (2-13-1). Particularly preferred compound (2) includes compound (2-1-1), compound (2-2-1), compound (2-4-1), compound (2-6-1) and compound (2-13-1). Preferred compound (3) includes compound (3-1-1) to compound (3-13-1). Further preferred compound (3) includes compound (3-1-1) to compound (3-3-1), compound (3-5-1) and compound (3-8-1). Particularly preferred compound (3) includes compound (3-1-1), compound (3-5-1) and compound (3-8-1).

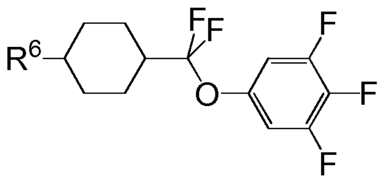

(1-1-1)

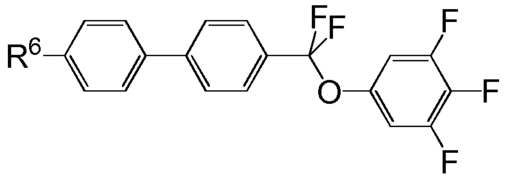

(1-2-1)

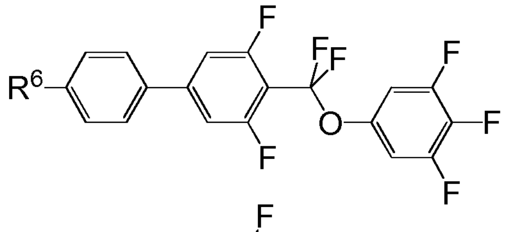

(1-3-1)

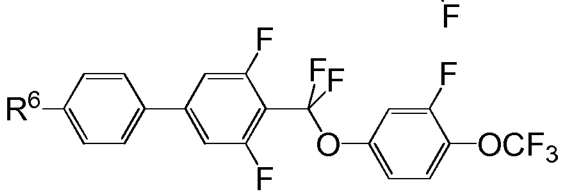

(1-3-2)

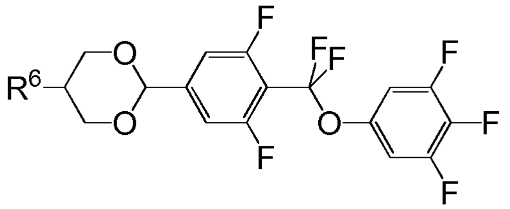

(1-4-1)

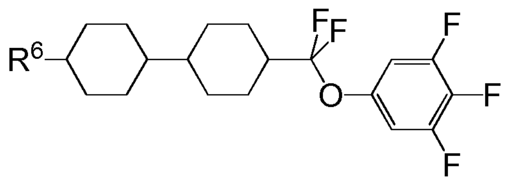

(1-5-1)

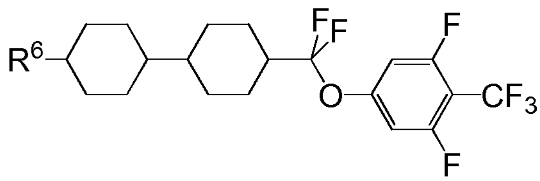

(1-5-2)

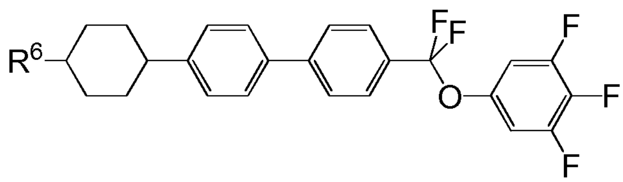

(1-6-1)

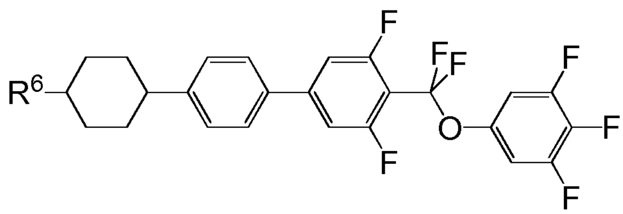

(1-6-2)

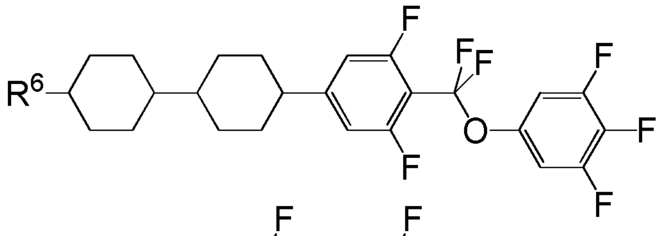

(1-7-1)

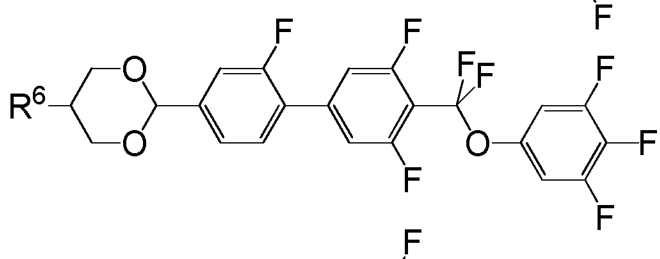

(1-8-1)

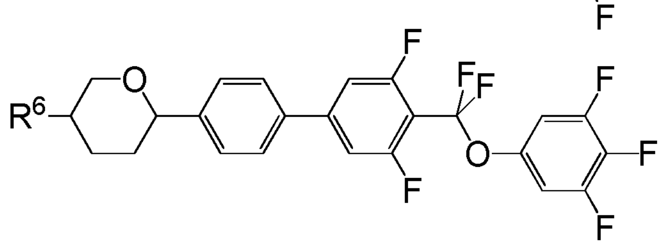

(1-9-1)

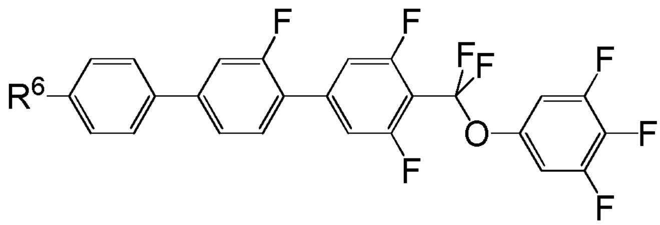

(1-10-1)

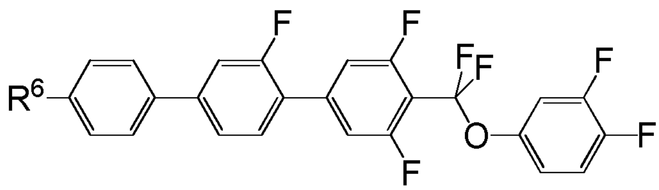

(1-10-2)

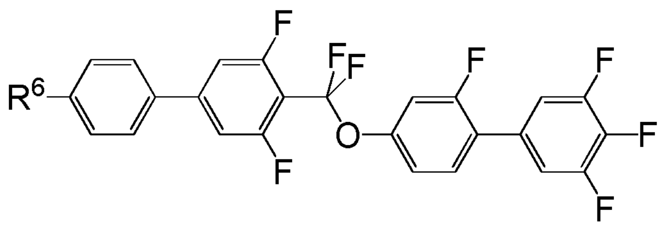

(1-11-1)

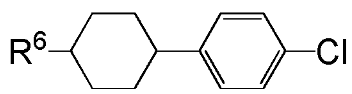

(1-12-1)

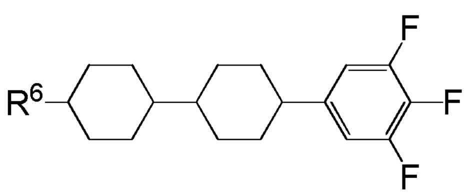

(1-13-1)

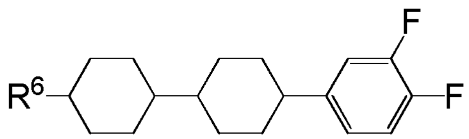
(1-13-2)

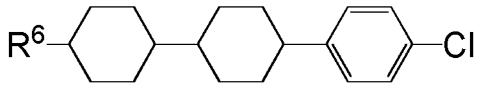
(1-13-3)

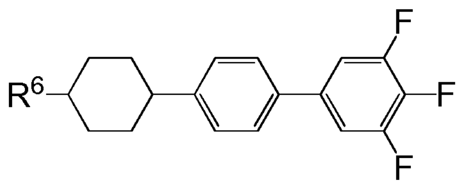
(1-14-1)

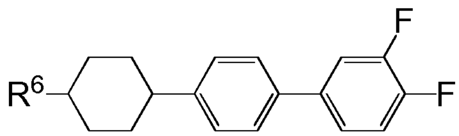
(1-14-2)

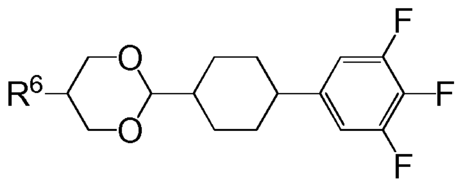
(1-15-1)

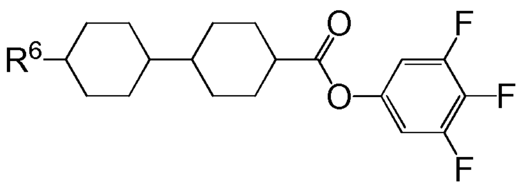
(1-16-1)

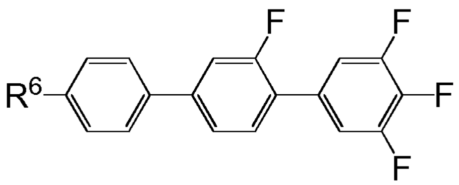
(1-17-1)

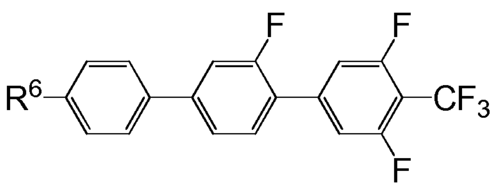
(1-17-2)

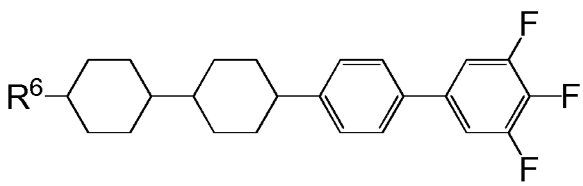
(1-18-1)

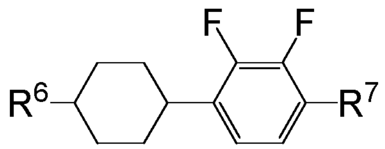

(2-1-1)

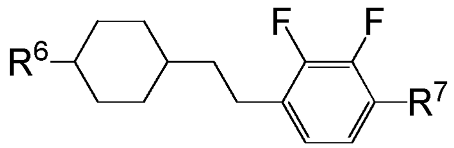

(2-2-1)

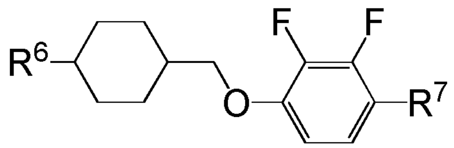

(2-3-1)

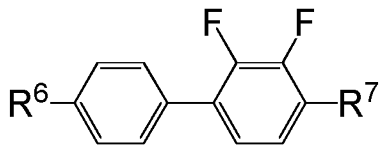

(2-4-1)

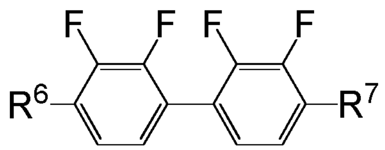

(2-5-1)

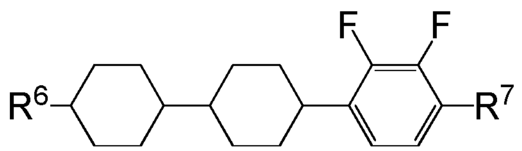

(2-6-1)

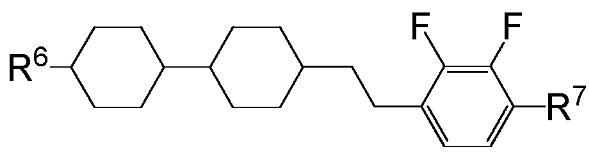

(2-7-1)

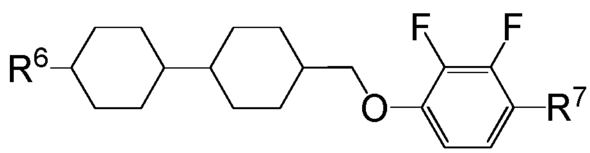

(2-8-1)

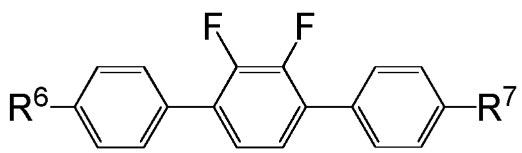

(2-9-1)

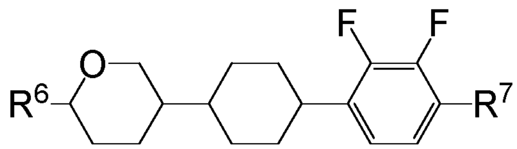

(2-10-1)

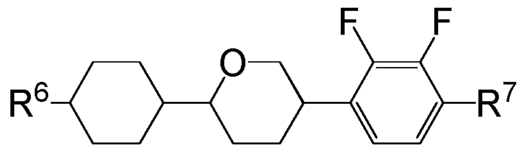

(2-11-1)

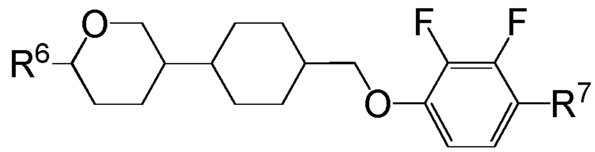

(2-12-1)

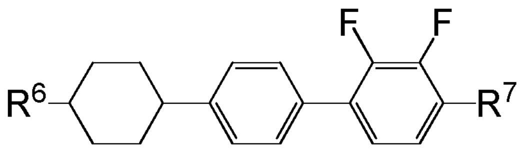

(2-13-1)

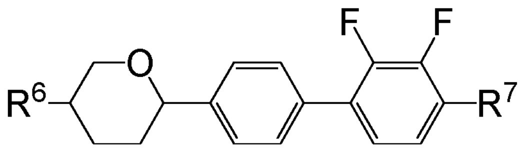

(2-14-1)

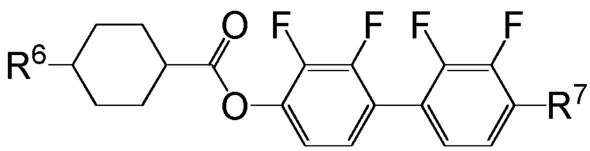

(2-15-1)

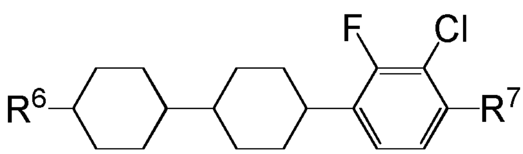

(2-16-1)

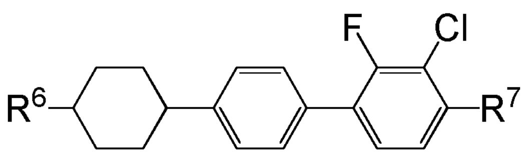

(2-17-1)

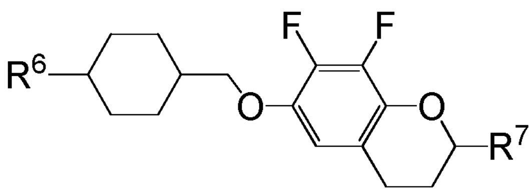

(2-18-1)

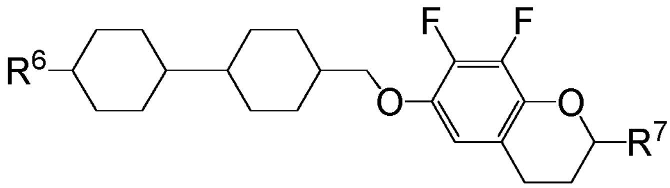

(2-19-1)

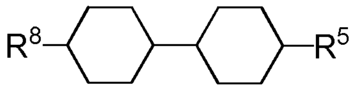

(3-1-1)

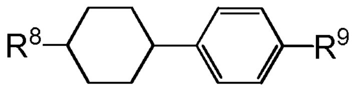

(3-2-1)

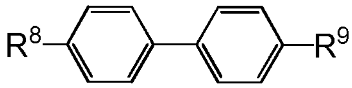

(3-3-1)

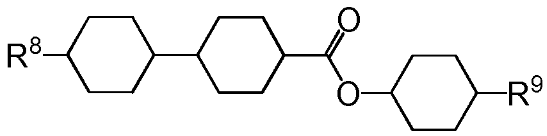

(3-4-1)

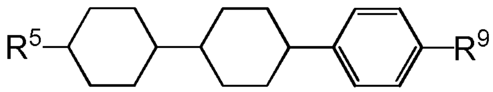

(3-5-1)

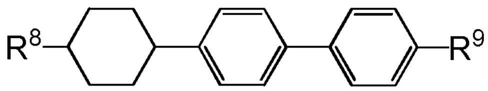

(3-6-1)

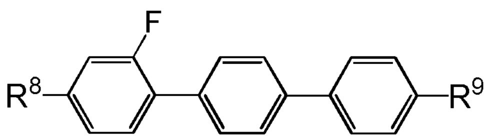

(3-7-1)

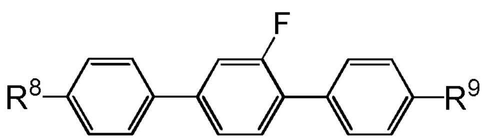

(3-8-1)

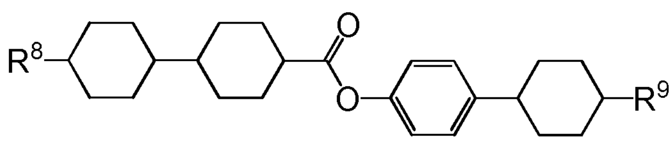

(3-9-1)

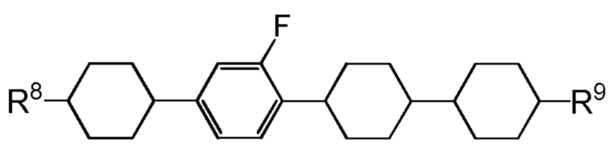

(3-10-1)

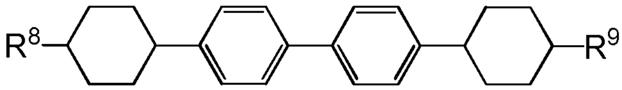
(3-11-1)

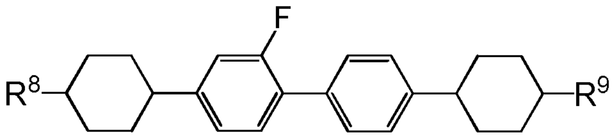
(3-12-1)

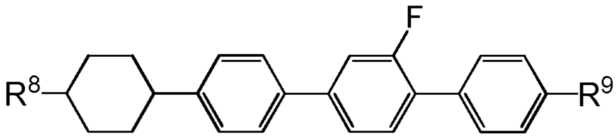
(3-13-1)

Sixth, the additive that may be mixed with the composition will be described. Such an additive includes the optically active compound, the antioxidant, the ultraviolet light absorber, the dye, the antifoaming agent, the polymerizable compound and the polymerization initiator. The optically active compound is mixed with the composition for the purpose of inducing a helical structure in liquid crystals to give a twist angle. Examples of such a compound include compound (4-1) to compound (4-5) . A preferred ratio of the optically active compound is about 5% by weight or less. A further preferred ratio is in the range of about 0.01% by weight to about 2% by weight.

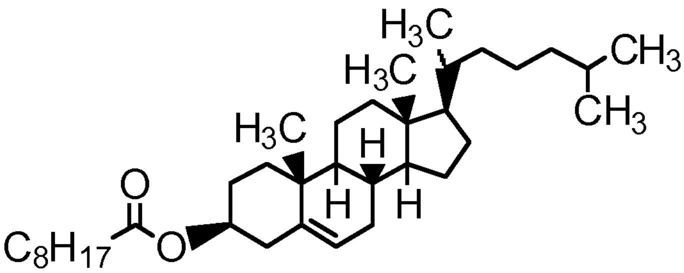
(4-1)

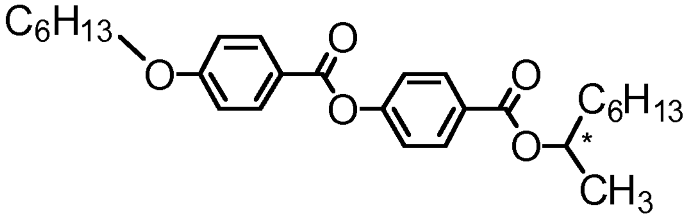
(4-2)

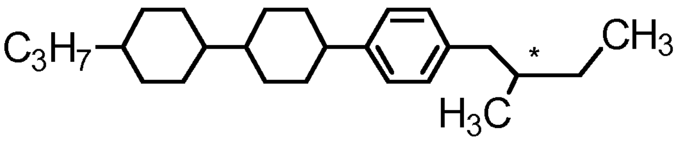
(4-3)

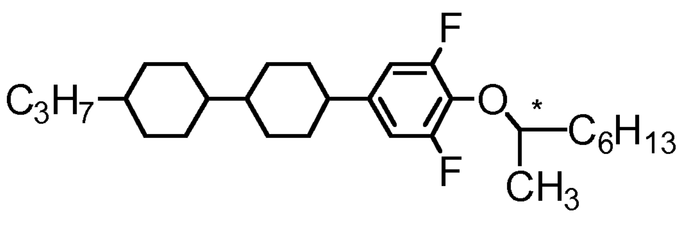
(4-4)

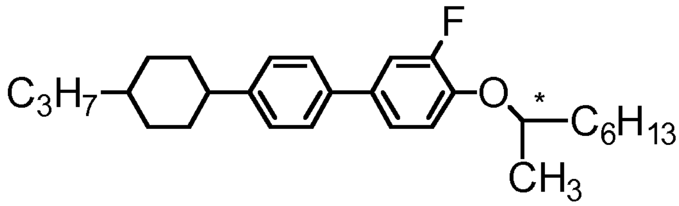

(4-5)

The antioxidant is mixed with the composition for the purpose of preventing a decrease in specific resistance caused by heating in air, or maintaining a large voltage holding ratio at room temperature and also at a temperature close to the maximum temperature of the nematic phase after the device has been used for a long period of time.

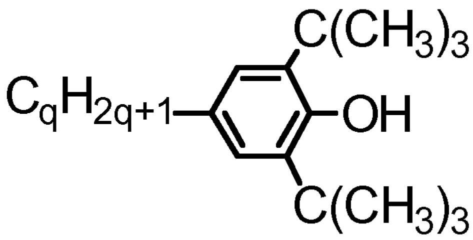

(5)

Preferred examples of the antioxidant include compound (5) where q is an integer from 1 to 9. In compound (5), preferred q is 1, 3, 5, 7 or 9. Further preferred q is 1 or 7. Compound (5) where q is 1 is effective in preventing a decrease in the specific resistance caused by heating in air because the compound (5) has a large volatility. Compound (5) where q is 7 is effective in maintaining a large voltage holding ratio at room temperature and also at a temperature close to the maximum temperature of the nematic phase even after the device has been used for a long period of time because the compound (5) has a small volatility. A preferred ratio of the antioxidant is about 50 ppm or more for achieving the effect thereof, and about 600 ppm or less for avoiding a decrease in the maximum temperature or avoiding an increase in the minimum temperature. A further preferred ratio is in the range of about 100 ppm to about 300 ppm.

Preferred examples of the ultraviolet light absorber include a benzophenone derivative, a benzoate derivative and a triazole derivative. A light stabilizer such as an amine having steric hindrance is also preferred. A preferred ratio of the absorber or the stabilizer is about 50 ppm or more for achieving the effect thereof, and about 10,000 ppm or less for avoiding a decrease in the maximum temperature or avoiding an increase in the minimum temperature. A further preferred ratio is in the range of about 100 ppm to about 10, 000 ppm.

A dichroic dye such as an azo dye or an anthraquinone dye is mixed with the composition to be adapted for a device having a guest host (GH) mode. A preferred ratio of the dye is in the range of about 0.01% by weight to about 10% by weight. The antifoaming agent such as dimethyl silicone oil or methyl phenyl silicone oil is mixed with the composition for preventing foam formation. A preferred ratio of the antifoaming agent is about 1 ppm or more for achieving the effect thereof, and about 1,000 ppm or less for avoiding a poor display. A further preferred ratio is in the range of about 1 ppm to about 500 ppm.

The polymerizable compound is mixed with the composition to be adapted for the device having the polymer sustained alignment (PSA) mode. Preferred examples of the polymerizable compound include a compound having a polymerizable group, such as an acrylate, a methacrylate, a vinyl compound, a vinyloxy compound, a propenyl ether, an epoxy compound (oxirane, oxetane) and a vinyl ketone. Particularly preferred examples include an acrylate derivative or a methacrylate derivative. Examples of such a compound include compound (6-1) to compound (6-9). A preferred ratio of the polymerizable compound is about 0.05% by weight or more for achieving the effect thereof, and about 10% by weight or less for avoiding a poor display. A further preferred ratio is in the range of about 0.1% by weight to about 2% by weight.

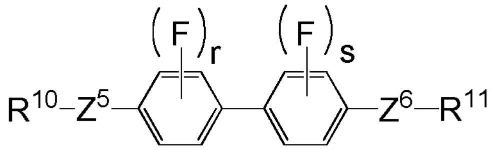

(6-1)

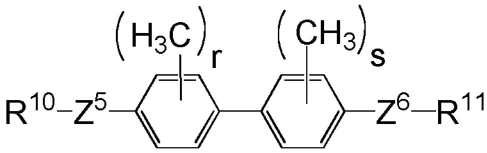

(6-2)

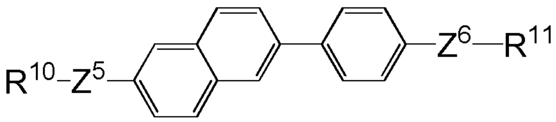

(6-3)

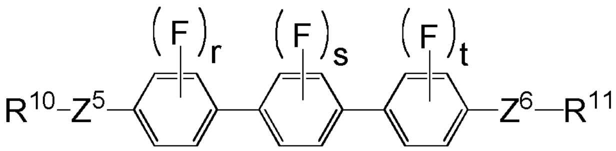

(6-4)

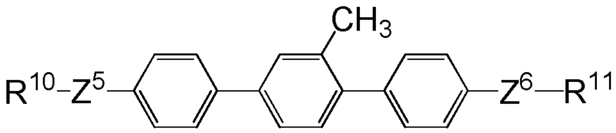

(6-5)

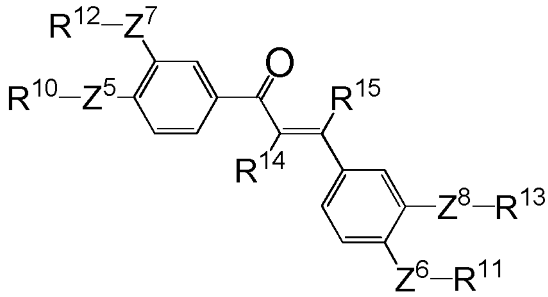

(6-6)

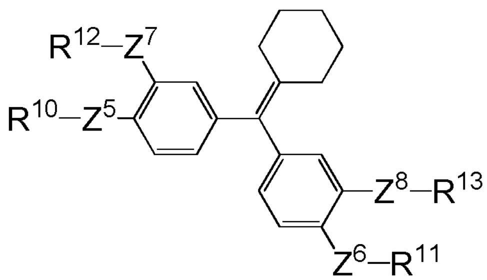

(6-7)

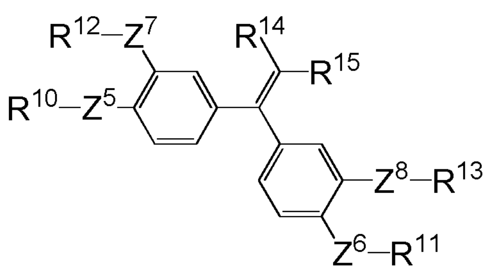

(6-8)

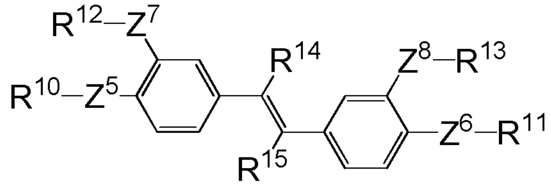

(6-9)

wherein, $R^{10}$, $R^{11}$, $R^{12}$ and $R^{13}$ are independently acryloyloxy or methacryloyloxy, $R^{14}$ and $R^{15}$ are independently hydrogen, halogen or alkyl having 1 to 10 carbons, $Z^5$, $Z^6$, $Z^7$ and $Z^8$ are independently a single bond or alkylene having 1 to 12 carbons, in which at least one of $-CH_2-$ may be replaced by -O- or -CH=CH-, and r, s and t are 0, 1 or 2. In compound (6-1), a perpendicular line crossing a hexagonal shape represents that arbitrary hydrogen on a six-membered ring may be replaced by fluorine. A subscript such as r shows the number of replaced fluorine. A same rule also applies to compound (6-2) or the like. In compound (6-1), a sum of r and s is 1 or more, and in compound (6-4), a sum of r, s and t is 1 or more.

The polymerizable compound is preferably polymerized by irradiation with ultraviolet light or the like in the presence of a suitable initiator such as a photopolymerization initiator. Suitable conditions for polymerization, suitable types of the initiator and suitable amounts thereof are known to a person skilled in the art and are described in literature. For example, Irgacure 651 (registered trademark; BASF), Irgacure 184 (registered trademark; BASF) or Darocur 1173 (registered trademark; BASF), each being a photoinitiator, is suitable for radical polymerization. A preferred ratio of the photopolymerization initiator is in the range of about 0.1% by weight to about 5% by weight of the polymerizable compound, and a particularly preferred ratio is in the range of about 1% by weight to about 3% by weight.

Seventh, the methods for synthesizing the component compounds will be described. Compound (1) to compound (3) can be prepared by known methods. Examples of synthetic methods will be presented. Compound (1-3-1), compound (1-6-2), compound (1-7-1) and compound (1-10-1) are prepared by the method described in JP H10-251186 A. Compound (1-14-1) and compound (1-16-1) are prepared by the method described in JP H2-233626 A. Compound (2-1-1) and compound (2-6-1) are prepared by the method described in JP H2-503441 A. Compound (3-1-1) is prepared by the method described in JP S59-176221 A. Compound (3-5-1) is prepared by the method described in JP S57-165328 A and JP S59-176221 A. The antioxidant is commercially available. A compound represented by formula (5) where q is 1 is available from Sigma-Aldrich Corporation. Compound (5) where q is 7 and so forth are prepared according to the method described in US 3,660,505 B.

Any compounds whose synthetic methods are not described above can be prepared according to the methods described in books such as Organic Syntheses (John Wiley & Sons, Inc.), Organic Reactions (John Wiley & Sons, Inc.), Comprehensive Organic Synthesis (Pergamon Press) and New Experimental Chemistry Course (Shin Jikken Kagaku Koza in Japanese) (Maruzen Co., Ltd.). The composition is prepared according to publicly known methods using the thus obtained compounds. For example, the component compounds are mixed and dissolved in each other by heating.

Eighth, the application of the composition will be described. The composition of the invention mainly has a minimum temperature of about -10°C or lower, a maximum temperature of about 70°C or higher, and optical anisotropy in the range of about 0.07 to about 0.20. The device including the composition has a large voltage holding ratio. The composition is suitable for use in the AM device. The composition is particularly suitable for use in a transmissive AM device. The composition having an optical anisotropy in the range of about 0.08 to about 0.25, and also the composition having an optical anisotropy in the range of about 0.10 to about 0.30 may be prepared by controlling the ratio of the component compounds or by mixing with any other liquid crystal compound. The composition can be used as the composition having the nematic phase and as the optically active composition by adding the optically active compound.

The composition can be used for the AM device. The composition can also be used for a PM device. The composition can be used for an AM device and a PM device having a mode such as PC, TN, STN, ECB, OCB, IPS, FFS, VA, PSA or FPA. Use for an AM device having the TN, OCB, IPS or FFS mode is particularly preferred. In an AM device having the IPS mode or FFS mode, alignment of liquid crystal molecules in a state in which no voltage is applied may be parallel or perpendicular to a panel substrate. The devices may be of a reflective type, a transmissive type or a transflective type. Use for the transmissive device is preferred. The composition can also be used for an amorphous silicon-TFT device or a polycrystal silicon-TFT device. The composition can also be used for a nematic curvilinear aligned phase (NCAP) device prepared by microencapsulating the composition, and for a polymer dispersed (PD) device in which a three-dimensional network-polymer is formed in the composition.

Last, the member used for the liquid crystal display device will be described. The liquid crystal display device includes a pair of substrates at least one of which is transparent, and has an alignment layer including a liquid crystal composition interposed between the substrates, a polarizing plate and transparent electrodes. For example, the liquid crystal display device includes two glass substrates referred to as an array substrate and a color filter substrate, and on each of the glass substrates, a thin film transistor (TFT), pixels, a coloring layer and so forth are formed. The liquid

crystal composition is injected between the two glass substrates to constitute the liquid crystal display device.

An aluminosilicate glass or aluminoborosilicate glass is used for each of the glass substrate, for example.

An aligning agent used for the alignment layer is not particularly limited, if the agent is a compound that has alignment properties by rubbing treatment to give alignment to the liquid crystal molecules. Typified examples include polyimide, polyamide, polyamideimide, polyvinyl alcohol, polyester, polycarbonate and polyamic acid being a precursor of polyimide, or a mixture in which a substance that maintains or enhances alignment characteristics is added thereto. In particular, polyimide, polyamic acid or polyvinyl alcohol is reputedly preferred.

The polarizing plate is obtained by allowing iodine molecules to adsorb onto monoaxially stretched polyvinyl alcohol (PVA) in a direction identical with the stretching direction to align the molecules.

As the transparent electrodes, indium-tin oxide or indium-zinc oxide is generally used.

**Examples**

In order to evaluate characteristics of a composition and a compound to be contained in the composition, the composition and the compound were made a measurement object. When the measurement object was the composition, the composition was measured as a sample as was, and values obtained were described. When the measurement object was the compound, a sample for measurement was prepared by mixing the compound (15% by weight) with a base liquid crystal (85% by weight). Values of characteristics of the compound were calculated using values obtained by measurement, according to an extrapolation method: (extrapolated value) = { (measured value of a sample for measurement) - 0.85 × (measured value of base liquid crystal)} / 0.15. When a smectic phase (or crystals) precipitated at the ratio thereof at 25°C, a ratio of the compound to the base liquid crystal was changed step by step in the order of (10% by weight : 90% by weight), (5% by weight : 95% by weight) and (1% by weight : 99% by weight). Values of maximum temperature, optical anisotropy, viscosity and dielectric anisotropy with regard to the compound were determined according to the above extrapolation method.

Components of the base liquid crystal are as described below. A ratio of each component is expressed in terms of percent by weight.

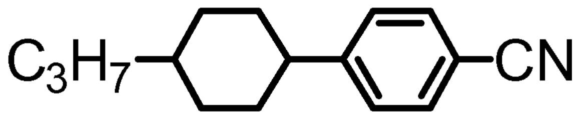

24%

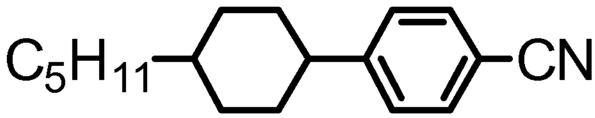

36%

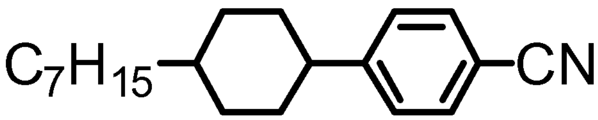

25%

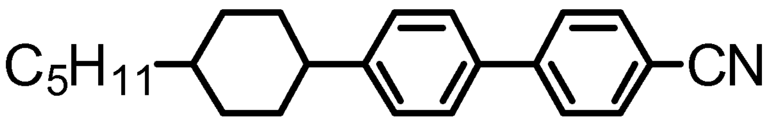

15%

Characteristics were measured according to the methods described below. Most of the measurement methods are applied as described in the Standard of the Japan Electronics and Information Technology Industries Association (hereinafter, abbreviated as JEITA) (JEITA ED-2521B) discussed and established by JEITA, or modified thereon.

Maximum temperature of a nematic phase (NI; °C) : A sample was placed on a hot plate in a melting point apparatus equipped with a polarizing microscope, and heated at a rate of 1°C per minute. Temperature when part of the sample began to change from a nematic phase to an isotropic liquid was measured. A maximum temperature of the nematic phase may be occasionally abbreviated as "maximum temperature."

Minimum temperature of a nematic phase ($T_c$; °C) : Samples each having a nematic phase were put in glass vials and kept in freezers at temperatures of 0°C, -10°C, -20°C, -30°C and -40°C for 10 days, and then liquid crystal phases were observed. For example, when the sample maintained the nematic phase at -20°C and changed to crystals or a smectic phase at -30°C, $T_c$ was expressed as $T_c$ < -20°C. A minimum temperature of the nematic phase may be

occasionally abbreviated as "minimum temperature."

Viscosity (bulk viscosity; η; measured at 20°C; mPa·s) : A cone-plate (E type) rotational viscometer was used for measurement.

Viscosity (rotational viscosity; γ1; measured at 25°C; mPa·s): Measurement was carried out according to the method described in M. Imai et al., Molecular Crystals and Liquid Crystals, Vol. 259, p. 37 (1995). A sample was put in a TN device in which a twist angle was 0 degrees and a distance (cell gap) between two glass substrates was 5 micrometers. Voltage was stepwise applied to the device in the range of 16 V to 19.5 V at an increment of 0.5 V. After a period of 0.2 second with no voltage application, voltage was applied repeatedly under the conditions of only one rectangular wave (rectangular pulse; 0.2 second) and no voltage application (2 seconds) . A peak current and a peak time of a transient current generated by the applied voltage were measured. A value of rotational viscosity was obtained from the measured values and a calculation equation (8) described on page 40 of the paper presented by M. Imai et al. A value of dielectric anisotropy necessary for the calculation was determined by the method described below using the device used for measuring the rotation viscosity.

Optical anisotropy (refractive index anisotropy; Δn; measured at 25°C): Measurement was carried out by an Abbe refractometer with a polarizing plate mounted on an ocular, using light at a wavelength of 589 nanometers. A surface of a main prism was rubbed in one direction, and then a sample was added dropwise onto the main prism. A refractive index (n||) was measured when the direction of polarized light was parallel to the direction of rubbing. A refractive index (n⊥) was measured when the direction of polarized light was perpendicular to the direction of rubbing. A value of optical anisotropy was calculated from an equation: Δn = n|| - n⊥.

Dielectric anisotropy (Δε; measured at 25°C) : A sample was put in a TN device in which a distance (cell gap) between two glass substrates was 9 micrometers and a twist angle was 80 degrees. Sine waves (10 V, 1 kHz) were applied to the device, and after 2 seconds, a dielectric constant (ε||) in the major axis direction of liquid crystal molecules was measured. Sine waves (0.5 V, 1 kHz) were applied to the device, and after 2 seconds, a dielectric constant (ε⊥) in the minor axis direction of the liquid crystal molecules was measured. A value of dielectric anisotropy was calculated from an equation: Δε = ε||- ε⊥.

Threshold voltage (Vth; measured at 25°C; V) : An LCD-5100 luminance meter made by Otsuka Electronics Co., Ltd. was used for measurement. A light source was a halogen lamp. A sample was put in a normally white mode TN device in which a distance (gap) between two glass substrates (cell gap) was about 0.45/Δn μm and a twist angle was 80 degrees. A voltage (32 Hz, rectangular waves) to be applied to the device was stepwise increased from 0 V to 10 V at an increment of 0.02 V. On the occasion, the device was irradiated with light from a direction perpendicular to the device, and an amount of light transmitted through the device was measured. A voltage-transmittance curve was prepared, in which the maximum amount of light corresponds to 100% transmittance and the minimum amount of light corresponds to 0% transmittance. A threshold voltage is a voltage at 90% transmittance.

Voltage holding ratio (VHR-1; measured at 25°C; %): A TN device used for measurement had a polyimide alignment film, and a distance (cell gap) between two glass substrates was 5 micrometers. A sample was put in the device, and then the device was sealed with an ultraviolet-curable adhesive. A pulse voltage (60 microseconds at 5 V) was applied to the device and the device was charged. A decaying voltage was measured for 16.7 milliseconds with a high-speed voltmeter, and area A between a voltage curve and a horizontal axis in a unit cycle was determined. Area B is an area without decay. A voltage holding ratio is a percentage of area A to area B.

Voltage holding Ratio (VHR-2; measured at 80°C; %): A TN device used for measurement had a polyimide alignment film, and a distance (cell gap) between two glass substrates was 5 micrometers. A sample was put in the device, and then the device was sealed with an ultraviolet-curable adhesive. A pulse voltage (60 microseconds at 5 V) was applied to the TN device and the device was charged. A decaying voltage was measured for 16.7 milliseconds with a high-speed voltmeter, and area A between a voltage curve and a horizontal axis in a unit cycle was determined. Area B is an area without decay. A voltage holding ratio is a percentage of area A to area B.

Voltage holding ratio (VHR-3; measured at 25°C; %) : Stability to ultraviolet light was evaluated by measuring a voltage holding ratio after a device was irradiated with ultraviolet light. A TN device used for measurement had a polyimide alignment film, and a cell gap was 5 micrometers. A sample was injected into the device, and then the device was irradiated with ultraviolet light for 20 minutes. A light source was an ultra high-pressure mercury lamp USH-500D (made by Ushio, Inc.), and a distance between the device and the light source was 20 centimeters. In VHR-3 measurement, a decaying voltage was measured for 16.7 milliseconds. A composition having a large VHR-3 has a large stability to ultraviolet light. A value of VHR-3 is preferably 90% or more, and further preferably, 95% or more.

Voltage holding ratio (VHR-4; measured at 25°C; %): A TN device into which a sample was injected was heated in a constant-temperature bath at 80°C for 500 hours, and then stability to heat was evaluated by measuring a voltage holding ratio. In VHR-4 measurement, a decaying voltage was measured for 16.7 milliseconds. A composition having a large VHR-4 has a large stability to heat.

Response time (τ; measured at 25°C; ms) : An LCD-5100 luminance meter made by Otsuka Electronics Co., Ltd. was used for measurement. A light source was a halogen lamp. A low-pass filter was set at 5 kHz. A sample was

put in a normally white mode TN device in which a distance between two glass substrates (cell gap) was 5.0 micrometers and a twist angle was 80 degrees. Rectangular waves (60 Hz, 5 V, 0.5 second) were applied to the device. On the occasion, the device was irradiated with light from a direction perpendicular to the device, and an amount of light transmitted through the device was measured. The maximum amount of light corresponds to 100% transmittance, and the minimum amount of light corresponds to 0% transmittance. A rise time ($\tau r$; ms) is a period of time needed for a change from 90% transmittance to 10% transmittance. A fall time ($\tau f$; ms) is a period of time needed for a change from 10% transmittance to 90% transmittance. A response time is a sum of the thus obtained rise time and fall time.

Elastic constant (K; measured at 25°C; pN) : HP4284A LCR Meter made by Yokogawa-Hewlett-Packard Co. was used for measurement. A sample was put in a horizontal alignment cell in which a distance between two glass substrates (cell gap) was 20 micrometers. An electric charge of 0 V to 20 V was applied to the cell, and electrostatic capacity and applied voltage were measured. Measured values of electrostatic capacity (C) and applied voltage (V) were fitted to equation (2.98) and equation (2.101) on page 75 of the "Liquid Crystal Device Handbook" (Ekisho Debaisu Handobukku, in Japanese; The Nikkan Kogyo Shimbun, Ltd.) and values of K11 and K33 were obtained from equation (2.99). Next, K22 was calculated using the values of K11 and K33 obtained above in formula (3.18) on page 171 of the Handbook. An elastic constant is a mean value of the thus determined K11, K22 and K33.

Specific resistance (ρ; measured at 25°C; Ωcm): Into a vessel equipped with electrodes, 1.0 milliliter of a sample was injected. A DC voltage (10 V) was applied to the vessel, and a DC current after 10 seconds was measured. A specific resistance was calculated from the following equation: (specific resistance) = { (voltage) × (electric capacity of a vessel)} / {(direct current) × (dielectric constant of vacuum)} .

Helical pitch (P; measured at room temperature; μm) : A helical pitch was measured according to a wedge method (Handbook of Liquid Crystals (Ekisho Binran in Japanese), page 196, (issued in 2000, Maruzen Co., Ltd.)) . A sample was injected into a wedge cell and left to stand at room temperature for 2 hours, and then a gap (d2 - d1) between disclination lines was observed by a polarizing microscope (trade name : MM40/60 Series, Nikon Corporation) . A helical pitch (P) was calculated according to the following equation in which an angle of the wedge cell was expressed as θ:

$$P = 2 \times (d2 - d1) \times \tan\theta.$$

Gas chromatographic analysis: GC-14B Gas Chromatograph made by Shimadzu Corporation was used for measurement. A carrier gas was helium (2 mL per minute) . A sample injector and a detector (FID) were set to 280°C and 300°C, respectively. A capillary column DB-1 (length 30 m, bore 0.32 mm, film thickness 0.25 μm; dimethylpolysiloxane as a stationary phase, non-polar) made by Agilent Technologies, Inc. was used for separation of component compounds. After the column was kept at 200°C for 2 minutes, the column was heated to 280°C at a rate of 5°C per minute. A sample was prepared in an acetone solution (0.1% by weight), and then 1 microliter of the solution was injected into the sample injector. A recorder was C-R5A Chromatopac made by Shimadzu Corporation or an equivalent thereof. The resulting chromatogram showed a peak retention time and a peak area corresponding to each of the component compounds.

As a solvent for diluting the sample, chloroform, hexane and so forth may also be used. The following capillary columns may also be used for separating the component compounds: HP-1 (length 30 m, bore 0.32 mm, film thickness 0.25 μm) made by Agilent Technologies, Inc., Rtx-1 (length 30 m, bore 0.32 mm, film thickness 0.25 μm) made by Restek Corporation and BP-1 (length 30 m, bore 0.32 mm, film thickness 0.25 μm) made by SGE International Pty. Ltd. A capillary column CBP1-M50-025 (length 50 m, bore 0.25 mm, film thickness 0.25 μm) made by Shimadzu Corporation may also be used for the purpose of avoiding an overlap of peaks of the compounds.

A ratio of liquid crystal compounds contained in the composition may be calculated by the method as described below. The liquid crystal compounds can be detected by a gas chromatograph. A ratio of the peak areas in the gas chromatogram corresponds to a ratio (in the number of moles) of the liquid crystal compounds. When the capillary columns described above were used, a correction coefficient of each of the liquid crystal compounds may be regarded as 1 (one). Accordingly, a ratio (% by weight) of the liquid crystal compounds was calculated from the ratio of the peak areas.

The invention will be described in detail by way of Examples. The invention is not limited by the Examples described below. The compounds in Comparative Examples and Examples were described using symbols according to definitions in Table 3 below. In Table 3, a configuration of 1,4-cyclohexylene is trans. A parenthesized number next to a symbolized compound corresponds to the number of the compound. A symbol (-) means any other liquid crystal compound. A ratio (percentage) of the liquid crystal compounds is expressed in terms of weight percent (% by weight) based on the total weight of the liquid crystal composition. The liquid crystal composition includes an impurity. Values of characteristics of the composition were summarized in a last part.

Table 3 Method for Description of Compounds using Symbols

$R-(A_1)-Z_1-\cdots\cdots-Z_n-(A_n)-R'$

| 1) Left-terminal Group R- | Symbol |
|---|---|
| $C_nH_{2n+1}-$ | n- |
| $C_nH_{2n+1}O-$ | nO- |
| $C_mH_{2m+1}OC_nH_{2n}-$ | mOn- |
| $CH_2=CH-$ | V- |
| $C_nH_{2n+1}-CH=CH-$ | nV- |
| $CH_2=CH-C_nH_{2n}-$ | Vn- |
| $C_mH_{2m+1}-CH=CH-C_nH_{2n}-$ | mVn- |
| $CF_2=CH-$ | VFF- |
| $CF_2=CH-C_nH_{2n}-$ | VFFn- |

| 2) Right-terminal Group - | Symbol |
|---|---|
| $-C_nH_{2n+1}$ | -n |
| $-OC_nH_{2n+1}$ | -On |
| $-CH=CH_2$ | -V |
| $-CH=CH-C_nH_{2n+1}$ | -Vn |
| $-C_nH_{2n}-CH=CH_2$ | -nV |
| $-C_mH_{2m}-CH=CH-C_nH_{2n+1}$ | -mVn |
| $-CH=CF_2$ | -VFF |
| -F | -F |
| -Cl | -CL |
| $-OCF_3$ | -OCF3 |
| $-CF_3$ | -CF3 |
| $-CF=CH-CF_3$ | -FVCF3 |
| $-CF=CF-CF_3$ | -FVFCF3 |

| 3) Bonding Group $-Z_n-$ | Symbol |
|---|---|
| $-C_nH_{2n}-$ | n |
| -COO- | E |
| -CH=CH- | V |
| $-CH_2O-$ | 1O |
| $-OCH_2-$ | O1 |
| $-CF_2O-$ | X |
| -C≡C- | T |
| 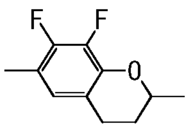 | Cro(7F,8F) |

| 4) Ring Structure-$A_n$- | Symbol |
|---|---|
| 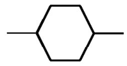 | H |
| 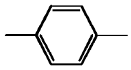 | B |
| 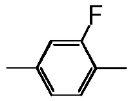 | B(F) |
| 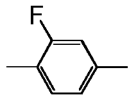 | B(2F) |
| 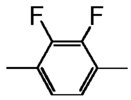 | B(2F,3F) |
| 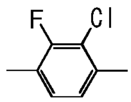 | B(2F,3CL) |
| 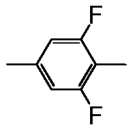 | B(F,F) |
| 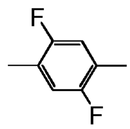 | B(2F,5F) |
| 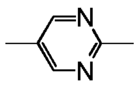 | Py |
| 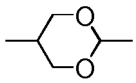 | G |
| 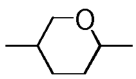 | dh |
| 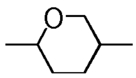 | Dh |

5) Examples of Description

| Example 1 3-HHB(2F,3 F)-O2 | Example 2 3-BB(F)B(F,F)XB(F,F)-F |
|---|---|
| 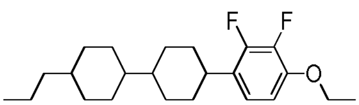 | 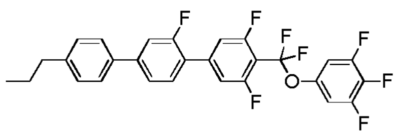 |

**Example 1**

| | | |
|---|---|---|
| 3-HBB(F,F)XB(F,F)-F | (1-6-2) | 7% |
| 4-GB(F)B(F,F)XB(F,F)-F | (1-8-1) | 3% |
| 3-BB(F)B(F,F)XB(F,F)-F | (1-10-1) | 3% |
| 4-BB(F)B(F,F)XB(F,F)-F | (1-10-1) | 7% |
| 3-BB(F)B(F,F)-F | (1-17-1) | 6% |
| 3-BB(F)B(F,F)-CF3 | (1-17-2) | 6% |
| 3-HHB(2F,3F)-O2 | (2-6-1) | 6% |
| 5-HHB(2F,3F)-O2 | (2-6-1) | 6% |
| 3-HH-V | (3-1-1) | 30% |
| 3-HH-V1 | (3-1-1) | 6% |
| 3-HB-O2 | (3-2-1) | 5% |
| 1-BB-3 | (3-3-1) | 6% |
| 5-B(F)BB-2 | (3-7-1) | 4% |
| 1-BB(F)B-2V | (3-8-1) | 5% |
| NI = 77.9°C; Tc < -20°C; $\eta$ = 15.2 mPa·s; $\Delta$n= 0.126; $\Delta\varepsilon$ = 6.9; $\varepsilon\perp$ = 3.8; Vth = 1.79 V; VHR-1 = 99.2%; VHR-2 = 97.8%. | | |

**Comparative Example 1**

A liquid crystal composition was formulated in which all of compound (2-6-1) being a second component of the invention were replaced by compound (3-5-1) being a third component of the invention in the composition of Example 1. The composition was prepared and measured by the methods described above. Components and characteristics of the composition are as described below.

| | | |
|---|---|---|
| 3-HBB (F,F)XB(F,F)-F | (1-6-2) | 7% |
| 4-GB(F)B(F,F)XB(F,F)-F | (1-8-1) | 3% |
| 3-BB(F)B(F,F)XB(F,F)-F | (1-10-1) | 3% |
| 4-BB(F)B(F,F)XB(F,F)-F | (1-10-1) | 7% |
| 3-BB(F)B(F,F)-F | (1-17-1) | 6% |
| 3-BB(F)B(F,F)-CF3 | (1-17-2) | 6% |
| 3-HH-V | (3-1-1) | 30% |
| 3-HH-V1 | (3-1-1) | 6% |
| 3-HB-O2 | (3-2-1) | 5% |
| 1-BB-3 | (3-3-1) | 6% |
| V-HHB-1 | (3-5-1) | 8% |
| 3-HHB-1 | (3-5-1) | 4% |
| 5-B(F)BB-2 | (3-7-1) | 4% |
| 1-BB(F)B-2V | (3-8-1) | 5% |
| NI = 77.0°C; Tc < -20°C; $\eta$ = 14.3 mPa·s; $\Delta$n = 0.125; $\Delta\varepsilon$ = 6.9; $\varepsilon\perp$ = 3.0; Vth = 1.78 V; VHR-1 = 99.2%; VHR-2 = 97.9%. | | |

The composition in Comparative Example 1 has a smaller dielectric constant in a minor axis direction in comparison with the composition in Example 1.

**Example 2**

| | | |
|---|---|---|
| 3-GB(F,F)XB(F,F)-F | (1-4-1) | 3 % |
| 3-HBBXB(F,F)-F | (1-6-1) | 5% |
| 4-GB(F)B(F,F)XB(F,F)-F | (1-8-1) | 3% |
| 3-BB(F)B(F,F)XB(F,F)-F | (1-10-1) | 3% |
| 4-BB(F)B(F,F)XB(F,F)-F | (1-10-1) | 6% |
| 3-BB(F)B(F,F)-F | (1-17-1) | 9% |
| 3-BB(F)B(F,F)-CF3 | (1-17-2) | 4% |
| 3-HHB(2F,3F)-O2 | (2-6-1) | 6% |
| 3-HBB(2F,3F)-O2 | (2-13-1) | 3% |
| V-HBB(2F,3F)-O2 | (2-13-1) | 4% |
| 3-HH-V | (3-1-1) | 39% |
| 3-HH-V1 | (3-1-1) | 5% |
| V-HHB-1 | (3-5-1) | 4% |
| 1-BB(F)B-2V | (3-8-1) | 3% |
| 2-BB(F)B-2V | (3-8-1) | 3% |
| NI = 83.2°C; Tc < -20°C; η = 13.6 mPa·s; Δn = 0.120; Δε = 6.2; ε⊥ = 3.9; Vth = 1.86 V; VHR-1 = 99.3%; VHR-2 = 98.0%. | | |

**Example 3**

| | | |
|---|---|---|
| 3-HHXB(F,F)-F | (1-5-1) | 3% |
| 3-GB(F)B(F,F)XB(F,F)-F | (1-8-1) | 3% |
| 4-GB(F)B(F,F)XB(F,F)-F | (1-8-1) | 3% |
| 4-BB(F)B(F,F)XB(F,F)-F | (1-10-1) | 3% |
| 3-BB(F)B(F,F)XB(F)-F | (1-10-2) | 4% |
| 3-H2B(2F,3F)-O2 | (2-2-1) | 5% |
| 3-HHB(2F,3F)-1 | (2-6-1) | 4% |
| V-HHB(2F,3F)-O2 | (2-6-1) | 3% |
| 3-HH-V | (3-1-1) | 20% |
| 3-HH-VFF | (3-1-1) | 28% |
| VFF-HHB-1 | (3-5-1) | 6% |
| VFF2-HHB-1 | (3-5-1) | 7% |
| 1-BB(F)B-2V | (3-8-1) | 5% |
| 2-BB(F)B-2V | (3-8-1) | 6% |
| NI = 82.4°C; Tc < -20°C; η = 11.9 mPa·s; Δn = 0.102; Δε = 3.5; ε⊥ = 3.9; Vth = 2.19 V; VHR-1 = 99.3%; VHR-2 = 98.4%. | | |

**Example 4**

| | | |
|---|---|---|
| 4-GB(F)B(F,F)XB(F,F)-F | (1-8-1) | 3% |
| 2-HHB(F)-F | (1-13-2) | 7 % |
| 3-HHB(F)-F | (1-13-2) | 6% |
| 5-HHB(F)-F | (1-13-2) | 6% |
| 2-HBB(F)-F | (1-14-2) | 6% |
| 3-HBB(F)-F | (1-14-2) | 6% |
| 5-HBB(F)-F | (1-14-2) | 6% |
| 3-HHEB(F,F)-F | (1-16-1) | 3% |
| 3-BB(F)B(F,F)-F | (1-17-1) | 13% |
| 2-H1OB(2F,3F)-O2 | (2-3-1) | 3% |
| 3-HHB(2F,3CL)-O2 | (2-16-1) | 4 % |
| 5-H1OCro(7F,8F)-5 | (2-18-1) | 4% |
| 3-HH-V | (3-1-1) | 13% |
| 3-HH-V1 | (3-1-1) | 7% |
| 1-HH-2V1 | (3-1-1) | 7% |
| V2-BB-1 | (3-3-1) | 3% |
| 2-BB(F)B-2V | (3-8-1) | 3 % |
| NI = 73.8°C; Tc < -20°C; η = 18.6 mPa·s; Δn = 0.109; Δε = 6.2; ε⊥ = 4.1; Vth = 1.74 V; VHR-1 = 99.0%; VHR-2 = 98.1%. | | |

**Example 5**

| | | |
|---|---|---|
| 3-GB(F,F)XB(F,F)-F | (1-4-1) | 3 % |
| 3-HBBXB(F,F)-F | (1-6-1) | 5% |
| 4-GB(F)B(F,F)XB(F,F)-F | (1-8-1) | 3% |
| 3-BB(F)B(F,F)XB(F,F)-F | (1-10-1) | 3% |
| 4-BB(F)B(F,F)XB(F,F)-F | (1-10-1) | 6% |
| 3-BB(F)B(F,F)-F | (1-17-1) | 9% |
| 3-BB(F)B(F,F)-CF3 | (1-17-2) | 4% |
| 3-BB(2F,3F)-O2 | (2-4-1) | 6% |
| 3-DhH1OB(2F,3F)-O2 | (2-12-1) | 3% |
| 3-HBB(2F,3F)-O2 | (2-13-1) | 4% |
| 3-HH-V | (3-1-1) | 31% |
| 3-HH-V1 | (3-1-1) | 5% |
| V-HHB-1 | (3-5-1) | 5% |
| 3-HBB-2 | (3-6-1) | 4% |
| 1-BB(F)B-2V | (3-8-1) | 3% |

(continued)

| | | |
|---|---|---|
| 2-BB(F)B-2V | (3-8-1) | 3% |
| 3-HB(F)HH-5 | (3-10-1) | 3% |
| NI = 83.4°C; Tc < -30°C; η = 16.5 mPa·s; Δn = 0.127; Δε = 6.4; ε⊥ = 3.9; Vth = 1.84 V; VHR-1 = 98.9%; VHR-2 = 97.7%. | | |

**Example 6** (comparative)

| | | |
|---|---|---|
| 3-BBXB(F,F)-F | (1-2-1) | 3% |
| 3-BB(F,F)XB(F,F)-F | (1-3-1) | 12% |
| 3-HHXB(F,F)-CF3 | (1-5-2) | 3 % |
| 3-BB(F)B(F,F)XB(F,F)-F | (1-10-1) | 3% |
| 4-BB(F)B(F,F)XB(F,F)-F | (1-10-1) | 5% |
| 3-HB-CL | (1-12-1) | 3% |
| 3-HBB-F | (1-14) | 5% |
| V-HB(2F,3F)-O2 | (2-1-1) | 5% |
| 2-BB(2F,3F)B-3 | (2-9-1) | 3% |
| 3-HBB(2F,3CL)-O2 | (2-17-1) | 3% |
| 3-HH1OCro(7F,8F)-5 | (2-19-1) | 3 % |
| 3-HH-V | (3-1-1) | 35% |
| 3-HH-V1 | (3-1-1) | 3% |
| 3-HBB-2 | (3-6-1) | 4% |
| 2-BB(F)B-3 | (3-8-1) | 3% |
| 5-HBB(F)B-2 | (3-13-1) | 4% |
| 5-HBB(F)B-3 | (3-13-1) | 3% |
| NI = 75.0°C; Tc < -20°C; η = 15.3 mPa·s; Δn = 0.114; Δε = 4.5; ε⊥ = 3.7; Vth = 2.02 V; VHR-1 = 99.2%; VHR-2 = 98.4%. | | |

**Example 7** (comparative)

| | | |
|---|---|---|
| 5-HXB(F,F)-F | (1-1-1) | 3 % |
| 3-BB(F,F)XB(F)-OCF3 | (1-3-2) | 4% |
| 3-HHB(F,F)XB(F,F)-F | (1-7-1) | 5 % |
| 3-dhBB(F,F)XB(F,F)-F | (1-9-1) | 3% |
| 4-BB(F)B(F,F)XB(F,F)-F | (1-10-1) | 4% |
| 3-HB-CL | (1-12-1) | 10% |
| 3-HHB-CL | (1-13-3) | 3% |
| 5-HHB-CL | (1-13-3) | 3% |
| 3-HBB (F,F)-F | (1-14-1) | 8 % |
| 3-HHBB(F,F)-F | (1-18-1) | 3% |

(continued)

| | | |
|---|---|---|
| 4-HHBB(F,F)-F | (1-18-1) | 3% |
| 4-B(2F,3F)B(2F,3F)-O2 | (2-5-1) | 3 % |
| 3-HH2B(2F,3F)-O2 | (2-7-1) | 5% |
| 3-HH1OB(2F,3F)-O2 | (2-8-1) | 6% |
| 2-HH-3 | (3-1-1) | 18% |
| 3-HH-4 | (3-1-1) | 10% |
| 3-HHB-1 | (3-5-1) | 3% |
| 5-HBBH-3 | (3-11-1) | 3% |
| 3-HB(F)BH-3 | (3-12-1) | 3 % |
| NI = 91.5°C; Tc <- 20°C; η = 16.6 mPa·s; Δn = 0.095; Δε = 5.6; ε⊥ = 3.6; Vth = 2.25 V; VHR-1 = 99.1%; VHR-2 = 98.0%. | | |

**Example 8** (comparative)

| | | |
|---|---|---|
| 3-BB(F,F)XB(F,F)-F | (1-3-1) | 9 % |
| 3-HBBXB(F,F)-F | (1-6-1) | 10% |
| 3-BB(F)B(F,F)XB(F,F)-F | (1-10-1) | 3 % |
| 4-BB(F)B(F,F)XB(F,F)-F | (1-10-1) | 7 % |
| 5-BB(F)B(F,F)XB(F,F)-F | (1-10-1) | 6% |
| 2-HHBB(F,F)-F | (1-18-1) | 4% |
| 3-HHBB(F,F)-F | (1-18-1) | 4% |
| 3-H2B(2F,3F)-O2 | (2-2-1) | 10% |
| 3-HH-V | (3-1-1) | 30% |
| 4-HH-V1 | (3-1-1) | 4% |
| V-HHB-1 | (3-5-1) | 10% |
| 1-BB(F)B-2V | (3-8-1) | 3% |
| NI = 86.1°C; Tc < -20°C; η = 14.2 mPa·s; Δn = 0.117; Δε = 7.0; ε⊥ = 3.9; Vth = 1.69 V; VHR-1 = 99.2%; VHR-2 = 97.8%. | | |

**Example 9** (comparative)

| | | |
|---|---|---|
| 3-BB(F,F)XB(F,F)-F | (1-3-1) | 10% |
| 3-HBBXB(F,F)-F | (1-6-1) | 6% |
| 3-BB(F)B(F,F)XB(F,F)-F | (1-10-1) | 3% |
| 4-BB(F)B(F,F)XB(F,F)-F | (1-10-1) | 7% |
| 5-BB(F)B(F,F)XB(F,F)-F | (1-10-1) | 5% |
| 3-HHB(F,F)-F | (1-13-1) | 3% |
| 2-HHBB(F,F)-F | (1-18-1) | 3% |
| 3-HHBB(F,F)-F | (1-18-1) | 3% |

(continued)

| | | |
|---|---|---|
| 3-HB(2F,3F)-O2 | (2-1-1) | 7% |
| 3-HB(2F,3F)-O4 | (2-1-1) | 3% |
| 3-HH-V | (3-1-1) | 25% |
| 3-HH-V1 | (3-1-1) | 4% |
| 3-HHEH-5 | (3-4-1) | 3% |
| V-HHB-1 | (3-5-1) | 12% |
| 1-BB(F)B-2V | (3-8-1) | 3 % |
| 3-HHEBH-4 | (3-9-1) | 3% |
| NI = 91.0°C; Tc < -20°C; η = 16.3 mPa·s; Δn = 0.113; Δε = 7.2; ε⊥ = 3.8; Vth = 1.76 V; VHR-1 = 99.1%; VHR-2 = 97.9%. | | |

**Example 10** (comparative)

| | | |
|---|---|---|
| 3-BB(F,F)XB(F,F)-F | (1-3-1) | 10% |
| 3-HBBXB(F,F)-F | (1-6-1) | 3% |
| 3-BB(F)B(F,F)XB(F,F)-F | (1-10-1) | 3% |
| 4-BB(F)B(F,F)XB(F,F)-F | (1-10-1) | 5% |
| 3-BB(F,F)XB(F)B(F,F)-F | (1-11-1) | 3% |
| 2-HHBB(F,F)-F | (1-18-1) | 5% |
| 3-HHBB(F,F)-F | (1-18-1) | 5% |
| 3-HB(2F,3F)-O2 | (2-1-1) | 6% |
| 3-HHB(2F,3F)-O2 | (2-6-1) | 9% |
| 3-DhHB(2F,3F)-O2 | (2-10-1) | 3% |
| 3-HEB(2F,3F)B(2F,3F)-O2 | (2-15-1) | 3% |
| 3-HH-V | (3-1-1) | 31% |
| 5-HH-V | (3-1-1) | 3% |
| 3-HH-O1 | (3-1-1) | 3 % |
| 1-BB(F)B-2V | (3-8-1) | 5 % |
| 4-HBBH-1O1 | (-) | 3 % |
| NI = 89.3°C; Tc < -20°C; η = 16.4 mPa·s; Δn = 0.113; Δε = 5.9; ε⊥ = 4.3; Vth = 1.87 V; VHR-1 = 99.3%; VHR-2 = 97.7%. | | |

**Example 11** (comparative)

| | | |
|---|---|---|
| 3-BB(F,F)XB(F,F)-F | (1-3-1) | 11% |
| 3-HBBXB(F,F)-F | (1-6-1) | 8% |
| 3-BB(F)B(F,F)XB(F,F)-F | (1-10-1) | 3% |
| 4-BB(F)B(F,F)XB(F,F)-F | (1-10-1) | 6% |
| 5-BB(F)B(F,F)XB(F,F)-F | (1-10-1) | 6% |

(continued)

| | | |
|---|---|---|
| 3-GHB(F,F)-F | (1-15-1) | 3% |
| 3-HHBB(F,F)-F | (1-18-1) | 4% |
| 3-HDhB(2F,3F)-O2 | (2-11-1) | 4% |
| 2-dhBB(2F,3F)-O2 | (2-14-1) | 4% |
| 3-HH-V | (3-1-1) | 40% |
| 3-HH-V1 | (3-1-1) | 5% |
| 3-HHB-O1 | (3-5-1) | 3% |
| 1-BB(F)B-2V | (3-8-1) | 3 % |
| NI = 85.2°C; Tc < -20°C; η = 15.0 mPa·s; Δn = 0.114; Δε = 7.3; ε⊥ = 3.6; Vth = 1.68 V; VHR-1 = 99.1%; VHR-2 = 97.6%. | | |

**Example 12** (comparative)

| | | |
|---|---|---|
| 3-BB(F,F)XB(F,F)-F | (1-3-1) | 9 % |
| 3-HBBXB(F,F)-F | (1-6-1) | 7% |
| 3-BB(F)B(F,F)XB(F,F)-F | (1-10-1) | 3% |
| 4-BB(F)B(F,F)XB(F,F)-F | (1-10-1) | 6% |
| 5-BB(F)B(F,F)XB(F,F)-F | (1-10-1) | 6% |
| 3-BB(F)B(F,F)-F | (1-17-1) | 3% |
| 2-HHBB(F,F)-F | (1-18-1) | 3% |
| 3-HHBB(F,F)-F | (1-18-1) | 3% |
| 1V2-HHB(2F,3F)-O2 | (2-6-1) | 3% |
| V2-HBB(2F,3F)-O2 | (2-13-1) | 3% |
| 1V2-HBB(2F,3F)-O2 | (2-13-1) | 3% |
| 3-HH-V | (3-1-1) | 40% |
| 7-HB-1 | (3-2-1) | 5% |
| 3-HHB-O1 | (3-5-1) | 3% |
| 1-BB(F)B-2V | (3-8-1) | 3 % |
| NI = 88.4°C; Tc < -20°C; η = 13.7 mPa·s; Δn = 0.118; Δε =7 .1; ε⊥ = 3.7; Vth = 1.70 V; VHR-1 = 99.1%; VHR-2 = 97.8%. | | |

**Example 13**

| | | |
|---|---|---|
| 3-BB(F,F)XB(F,F)-F | (1-3-1) | 8% |
| 3-GB(F,F)XB(F,F)-F | (1-4-1) | 8% |
| 3-HBBXB(F,F)-F | (1-6-1) | 8% |
| 3-HBB(F,F)XB(F,F)-F | (1-6-2) | 7% |
| 2-BB(2F,3F)B-3 | (2-9-1) | 12% |
| 3-HBB(2F,3F)-O2 | (2-13-1) | 5% |

(continued)

| | | |
|---|---|---|
| 3-HH-V | (3-1-1) | 31% |
| V-HHB-1 | (3-5-1) | 10% |
| V2-HHB-1 | (3-5-1) | 8% |
| 1-BB(F)B-2V | (3-8-1) | 3% |
| NI = 89.4°C; Tc < -20°C; η = 14.2 mPa·s; Δn = 0.119; Δε = 5.7; ε⊥ = 3.7; Vth = 1.87 V; VHR-1 = 99.2%; VHR-2 = 98.1%. | | |

**Example 14**

| | | |
|---|---|---|
| 3-HBBXB(F,F)-F | (1-6-1) | 7% |
| 3-GB(F)B(F,F)XB(F,F)-F | (1-8-1) | 3% |
| 3-BB(F)B(F,F)XB(F,F)-F | (1-10-1) | 3% |
| 4-BB(F)B(F,F)XB(F,F)-F | (1-10-1) | 7% |
| 5-BB(F)B(F,F)XB(F,F)-F | (1-10-1) | 3% |
| 3-BB(F)B(F,F)-F | (1-17-1) | 8% |
| 3-HBB(2F,3F)-O2 | (2-13-1) | 9% |
| 3-HH-V | (3-1-1) | 45% |
| 3-HH-V1 | (3-1-1) | 8% |
| 1-BB(F)B-2V | (3-8-1) | 7% |
| NI = 81.9°C; Tc < -20°C; η = 11.7 mPa·s; Δn = 0.118; Δε = 5.6; ε⊥ = 3.7; Vth = 1.88 V; VHR-1 = 99.1%; VHR-2 = 97.9%. | | |

**Example 15**

| | | |
|---|---|---|
| 3-HHXB(F,F)-F | (1-5-1) | 18% |
| 3-HBBXB(F,F)-F | (1-6-1) | 4% |
| 3-GB(F)B(F,F)XB(F,F)-F | (1-8-1) | 3% |
| 4-GB(F)B(F,F)XB(F,F)-F | (1-8-1) | 3% |
| 3-HHB(F,F)-F | (1-13-1) | 5% |
| 3-HBB(F,F)-F | (1-14-1) | 11% |
| 3-HHB(2F,3F)-O2 | (2-6-1) | 3% |
| 5-HHB(2F,3F)-O2 | (2-6-1) | 3% |
| 2-HBB(2F,3F)-O2 | (2-13-1) | 3% |
| 4-HBB(2F,3F)-O2 | (2-13-1) | 3% |
| 5-HBB(2F,3F)-O2 | (2-13-1) | 3% |
| 3-HH-V | (3-1-1) | 35% |
| 1-BB(F)B-2V | (3-8-1) | 3% |
| 2-BB(F)B-2V | (3-8-1) | 3% |
| NI = 90.0°C; Tc < -20°C; η = 15.9 mPa·s; Δn = 0.101; Δε = 4.9; ε⊥ = 3.8; Vth = 1.87 V; VHR-1 = 99.2%; VHR-2 = 98.2%. | | |

The compositions in Example 1 to Example 15 to be used for the liquid crystal display devices have a larger dielectric constant in the minor axis direction of the liquid crystal molecules in comparison with the composition in Comparative Example 1. Therefore, the liquid crystal composition to be used for the liquid crystal display device of the invention has further excellent characteristics.

**Industrial Applicability**

The invention concerns a liquid crystal composition satisfying at least one of characteristics such as a high maximum temperature of a nematic phase, a low minimum temperature of the nematic phase, a small viscosity, a suitable optical anisotropy, a large dielectric anisotropy, a large dielectric constant in a minor axis direction of liquid crystal molecules, a large specific resistance, a large elastic constant, a high stability to ultraviolet light and a high stability to heat, or a liquid crystal composition having a suitable balance regarding at least two of the characteristics. A liquid crystal display device including such a composition is applied to constitute an AM device having a short response time, a large voltage holding ratio, a large contrast ratio, a long service life and so forth, and thus can be used for a liquid crystal projector, a liquid crystal television and so forth.

## Claims

1. A liquid crystal display device comprising a pair of substrates at least one of which is transparent, and having an alignment layer including a liquid crystal composition having a positive dielectric anisotropy as interposed between the substrates, a polarizing plate and transparent electrodes, wherein the liquid crystal composition contains at least one compound selected from the group of compounds represented by formula (1) as a first component, and at least one compound selected from the group of compounds represented by formula (2) as a second component, wherein the first component contains at least one compound selected from the group of compounds represented by formula (1-4) and formula (1-8):

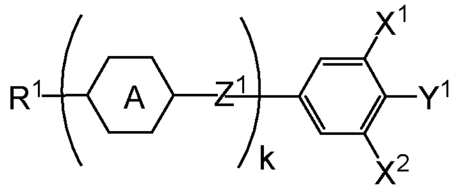

(1)

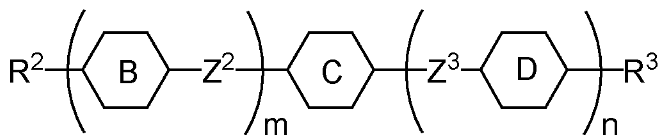

(2)

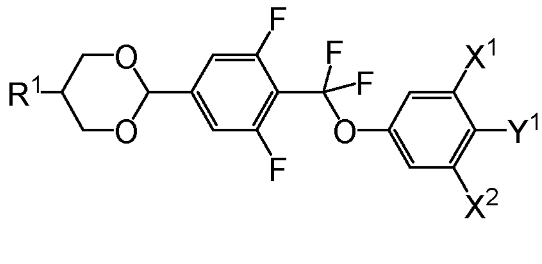

(1-4)

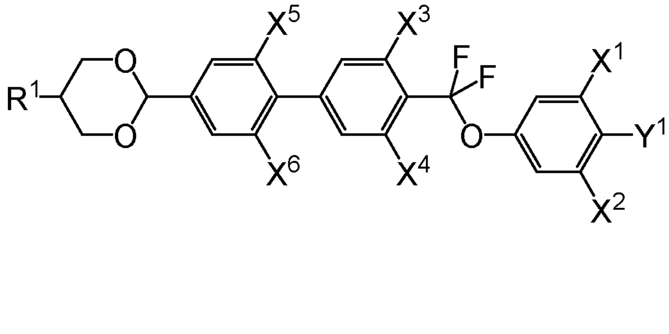

(1-8)

wherein, $R^1$ is alkyl having 1 to 12 carbons, alkoxy having 1 to 12 carbons or alkenyl having 2 to 12 carbons; $R^2$ and $R^3$ are independently alkyl having 1 to 12 carbons, alkoxy having 1 to 12 carbons, alkenyl having 2 to 12 carbons or alkenyloxy having 2 to 12 carbons; ring A is 1,4-cyclohexylene, 1,4-phenylene, 2-fluoro-1,4-phenylene, 3-fluoro-1,4-phenylene, 3,5-difluoro-1,4-phenylene, pyrimidine-2,5-diyl, 1,3-dioxane-2,5-diyl or tetrahydropyran-2,5-diyl; ring B and ring D are independently 1,4-cyclohexylene, tetrahydropyran-2,5-diyl, 1,4-phenylene, or 1,4-phenylene in which at least one of hydrogen is replaced by fluorine or chlorine; ring C is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7, 8-difluorochroman-2, 6-diyl; $X^1$, $X^2$, $X^3$, $X^4$, $X^5$ and $X^6$ are independently hydrogen or fluorine; $Y^1$ is fluorine, chlorine, trifluoromethyl or trifluoromethoxy; $Z^1$ is a single bond, ethylene, carbonyloxy or difluoromethyleneoxy; $Z^2$ and $Z^3$ are independently a single bond, ethylene, methyleneoxy or carbonyloxy; k is 1, 2 or 3; m is 1, 2 or 3; and n is 0 or 1, and a sum of m and n is 3 or less.

2. The liquid crystal display device according to claim 1, including at least one compound selected from the group of compounds represented by formula (1-1) to formula (1-3), formula (1-5) to formula (1-7) and formula (1-9) to formula (1-18) as the first component of the liquid crystal composition:

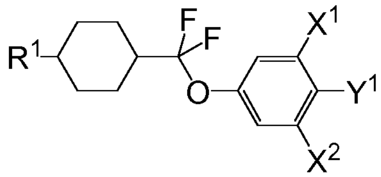
(1-1)

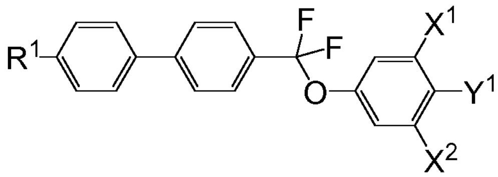
(1-2)

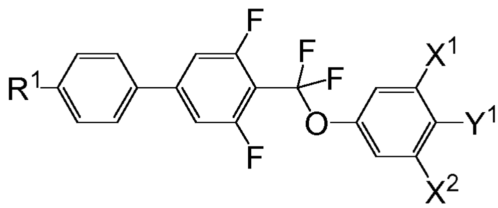
(1-3)

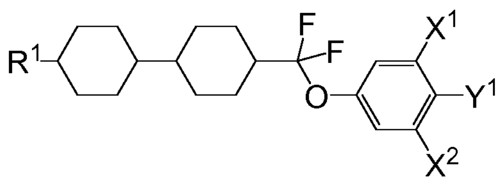
(1-5)

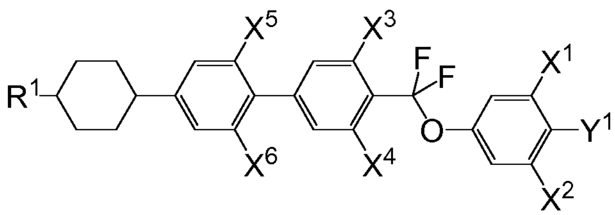
(1-6)

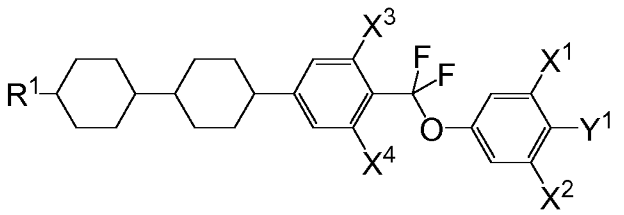
(1-7)

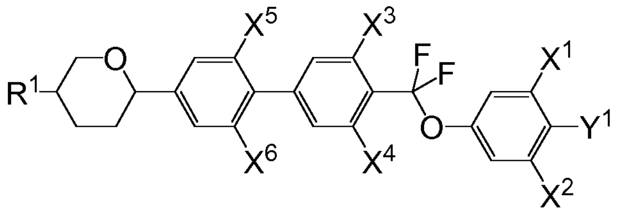
(1-9)

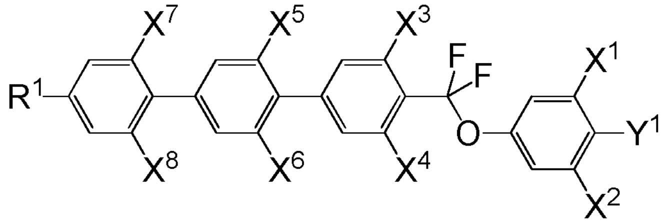
(1-10)

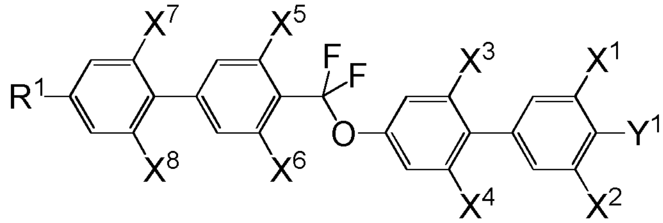
(1-11)

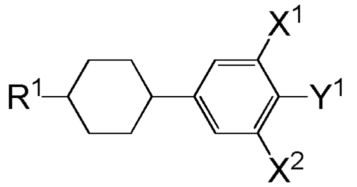
(1-12)

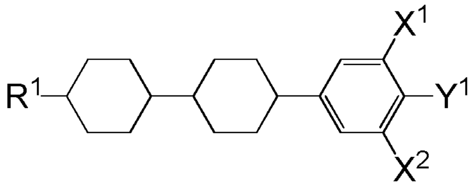
(1-13)

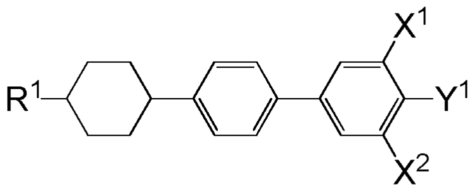
(1-14)

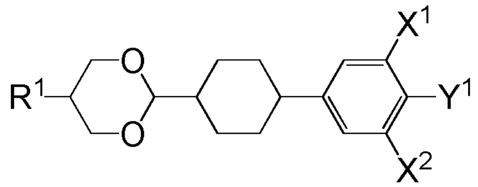

(1-15)

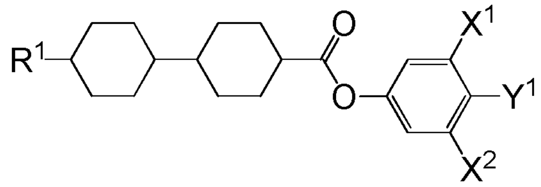

(1-16)

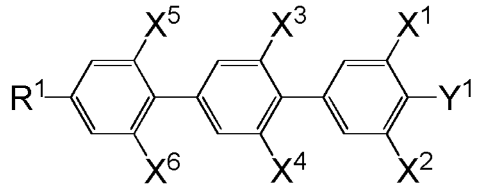

(1-17)

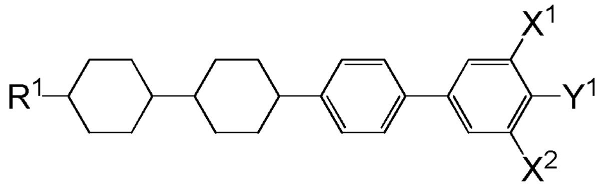

(1-18)

wherein, $R^1$ is alkyl having 1 to 12 carbons, alkoxy having 1 to 12 carbons or alkenyl having 2 to 12 carbons; $X^1$, $X^2$, $X^3$, $X^4$, $X^5$, $X^6$, $X^7$ and $X^8$ are independently hydrogen or fluorine; and $Y^1$ is fluorine, chlorine, trifluoromethyl or trifluoromethoxy.

**3.** The liquid crystal display device according to claim 1 or 2, including at least one compound selected from the group of compounds represented by formula (1-10) according to claim 2 as the first component of the liquid crystal composition.

**4.** The liquid crystal display device according to any one of claims 1 to 3, including at least one compound selected from the group of compounds represented by formula (2-1) to formula (2-19) as the second component of the liquid crystal composition:

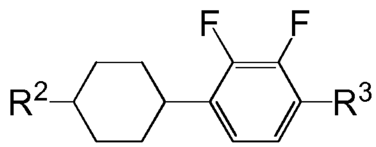

(2-1)

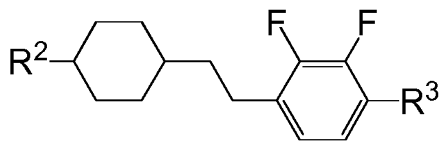

(2-2)

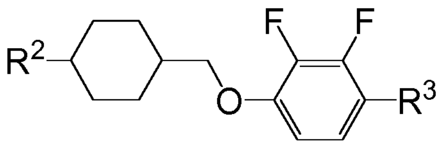

(2-3)

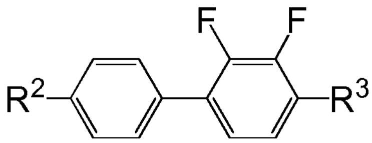

(2-4)

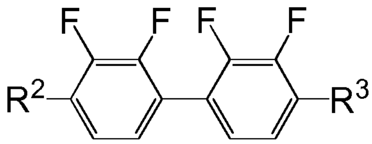

(2-5)

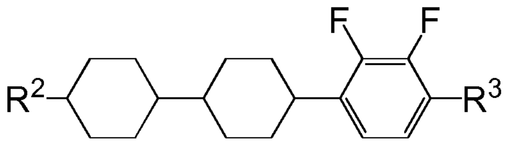

(2-6)

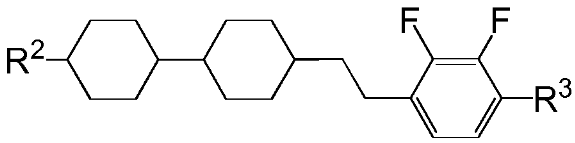

(2-7)

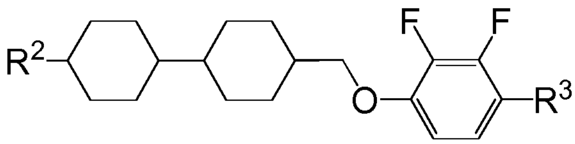

(2-8)

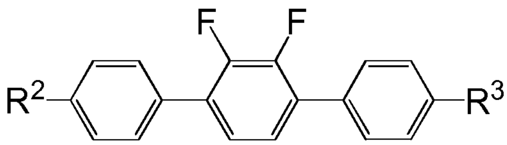

(2-9)

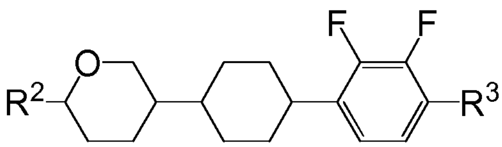

(2-10)

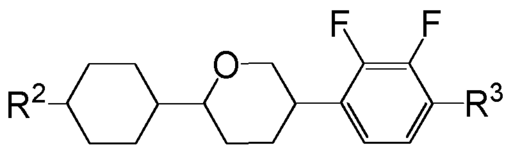

(2-11)

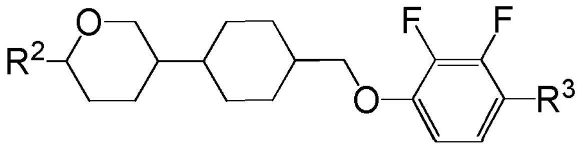

(2-12)

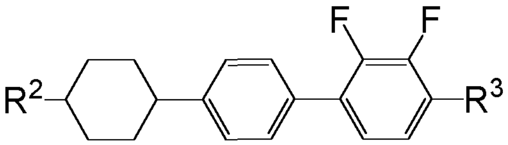

(2-13)

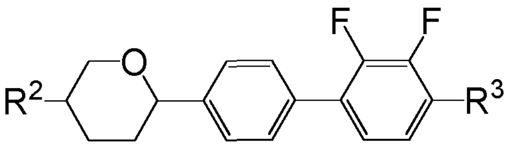

(2-14)

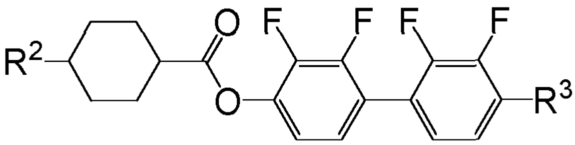

(2-15)

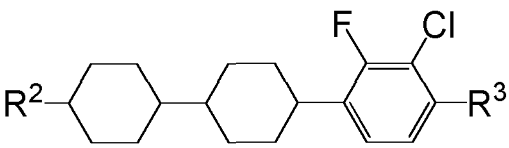

(2-16)

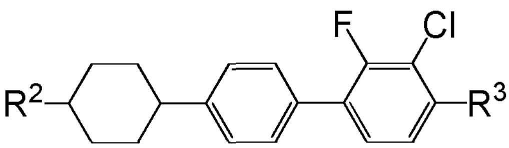

(2-17)

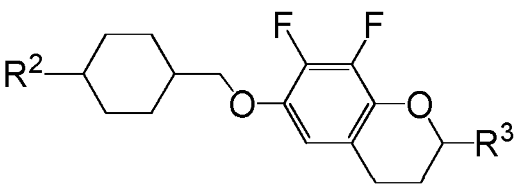

(2-18)

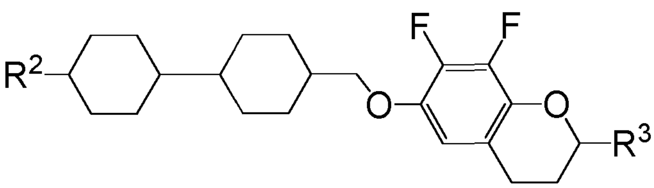

(2-19)

wherein, $R^2$ and $R^3$ are independently alkyl having 1 to 12 carbons, alkoxy having 1 to 12 carbons, alkenyl having 2 to 12 carbons or alkenyloxy having 2 to 12 carbons.

**5.** The liquid crystal display device according to any one of claims 1 to 4, wherein the liquid crystal composition has a ratio of the first component in the range of 5% by weight to 95% by weight and a ratio of the second component in the range of 5% by weight to 50% by weight, based on the total weight of the liquid crystal composition.

**6.** The liquid crystal display device according to any one of claims 1 to 5, further including at least one compound

selected from the group of compounds represented by formula (3) as a third component of the liquid crystal composition:

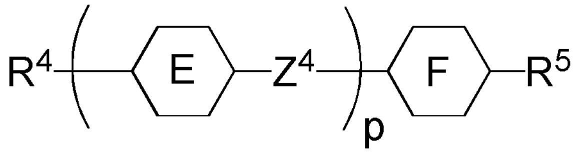 (3)

wherein, $R^4$ and $R^5$ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine; ring E and ring F are independently 1,4-cyclohexylene, 1,4-phenylene, 2-fluoro-1,4-phenylene, 3-fluoro-1,4-phenylene or 2,5-difluoro-1,4-phenylene; $Z^4$ is a single bond, ethylene or carbonyloxy; and p is 1, 2 or 3.

**7.** The liquid crystal display device according to any one of claims 1 to 6, including at least one compound selected from the group of compounds represented by formula (3-1) to formula (3-13) as the third component of the liquid crystal composition:

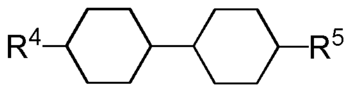 (3-1)

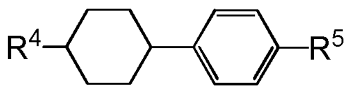 (3-2)

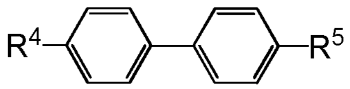 (3-3)

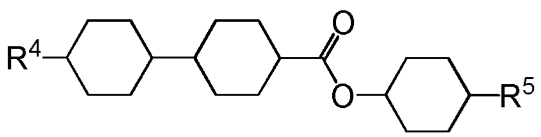 (3-4)

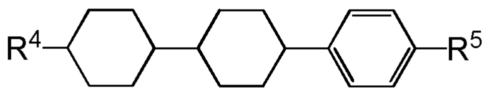 (3-5)

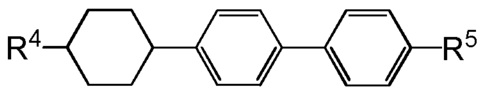 (3-6)

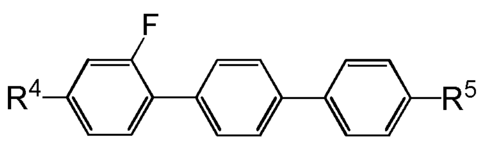 (3-7)

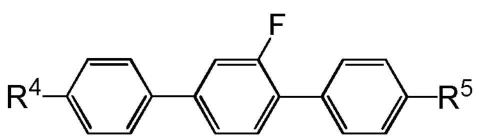 (3-8)

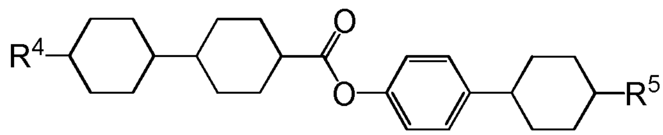

(3-9)

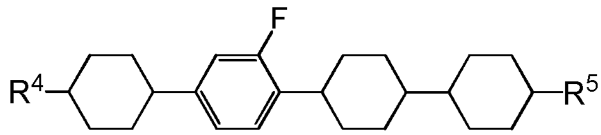

(3-10)

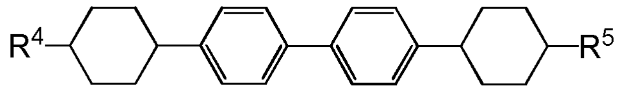

(3-11)

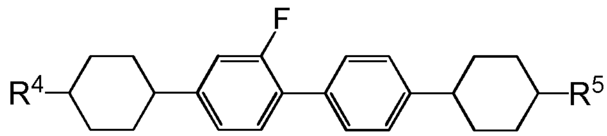

(3-12)

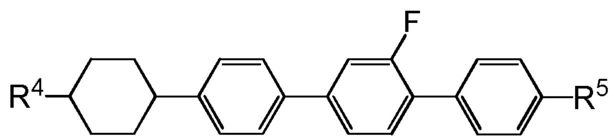

(3-13)

wherein, $R^4$ and $R^5$ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine.

**8.** The liquid crystal display device according to claim 6 or 7, wherein the liquid crystal composition has a ratio of the third component in the range of 10% by weight to 90% by weight based on the total weight of the liquid crystal composition.

**9.** The liquid crystal display device according to any one of claims 1 to 8, wherein an operating mode of the liquid crystal display device includes an FFS mode, and a driving mode of the liquid crystal display device includes an active matrix mode.

**10.** The liquid crystal display device according to any one of claims 1 to 9, wherein the operating mode of the liquid crystal display device includes a TN mode, an ECB mode, an OCB mode, an IPS mode, a PSA mode or an FPA mode, and the driving mode of the liquid crystal display device includes an active matrix mode.

**11.** A liquid crystal composition contained in the liquid crystal display device according to any one of claims 1 to 10.

**12.** The liquid crystal composition according to claim 11, wherein a maximum temperature of a nematic phase is 70°C or more, optical anisotropy measured (at 25°C) at a wavelength of 589 nanometers is 0.07 or more and dielectric anisotropy measured (at 25°C) at a frequency of 1 kHz is 2 or more.

**13.** The liquid crystal composition according to claim 11 or 12, wherein a dielectric constant measured (at 25°C) at a frequency of 1 kHz in a minor axis direction of liquid crystal molecules is 3.5 or more.

**14.** Use of the liquid crystal composition according to any one of claims 11 to 13 in a liquid crystal display device.

**Patentansprüche**

**1.** Flüssigkristallanzeigevorrichtung, umfassend ein Paar Substrate, von denen mindestens eines transparent ist, und

mit einer Ausrichtungsschicht, die eine Flüssigkristallzusammensetzung mit einer positiven dielektrischen Anisotropie bei Anordnung zwischen den Substraten aufweist, einer Polarisationsplatte und transparenten Elektroden, wobei die Flüssigkristallzusammensetzung mindestens eine Verbindung, die aus der Gruppe der durch Formel (1) wiedergegebenen Verbindungen ausgewählt ist, als einen ersten Bestandteil und mindestens eine Verbindung, die aus der Gruppe der durch Formel (2) wiedergegebenen Verbindungen ausgewählt ist, als einen zweiten Bestandteil enthält, wobei der erste Bestandteil mindestens eine Verbindung enthält, die aus der Gruppe der durch Formel (1-4) und Formel (1-8) wiedergegebenen Verbindungen ausgewählt ist:

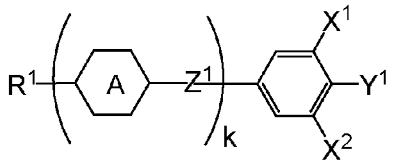

(1)

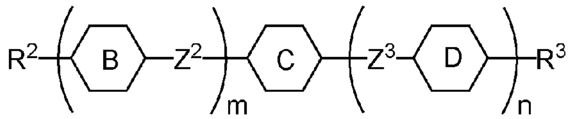

(2)

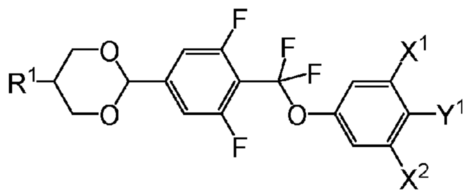

(1-4)

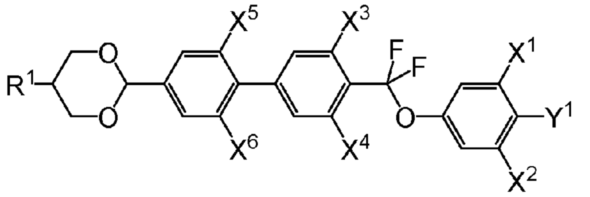

(1-8)

wobei $R^1$ Alkyl mit 1 bis 12 Kohlenstoffen, Alkoxy mit 1 bis 12 Kohlenstoffen oder Alkenyl mit 2 bis 12 Kohlenstoffen ist; $R^2$ und $R^3$ unabhängig Alkyl mit 1 bis 12 Kohlenstoffen, Alkoxy mit 1 bis 12 Kohlenstoffen, Alkenyl mit 2 bis 12 Kohlenstoffen oder Alkenyloxy mit 2 bis 12 Kohlenstoffen sind; Ring A 1,4-Cyclohexylen, 1,4-Phenylen, 2-Fluor-1,4-phenylen, 3-Fluor-1,4-phenylen, 3,5-Difluor-1,4-phenylen, Pyrimidin-2,5-diyl, 1,3-Dioxan-2,5-diyl oder Tetrahydropyran-2,5-diyl ist; Ring B und Ring D unabhängig 1,4-Cyclohexylen, Tetrahydropyran-2,5-diyl, 1,4-Phenylen oder 1,4-Phenylen, in dem mindestens einer der Wasserstoffe durch Fluor oder Chlor ersetzt ist, sind; Ring C 2,3-Difluor-1,4-phenylen, 2-Chlor-3-fluor-1,4-phenylen, 2,3-Difluor-5-methyl-1,4-phenylen, 3,4,5-Trifluornaphthalin-2,6-diyl oder 7,8-Difluorchroman-2,6-diyl ist; $X^1$, $X^2$, $X^3$, $X^4$, $X^5$ und $X^6$ unabhängig Wasserstoff oder Fluor sind; $Y^1$ Fluor, Chlor, Trifluormethyl oder Trifluormethoxy ist; $Z^1$ eine Einfachbindung, Ethylen, Carbonyloxy oder Difluormethylenoxy ist; $Z^2$ und $Z^3$ unabhängig eine Einfachbindung, Ethylen, Methylenoxy oder Carbonyloxy sind; k = 1, 2 oder 3 ist; m = 1, 2 oder 3 ist und n = 0 oder 1 ist und eine Summe aus m und n = 3 oder weniger ist.

**2.** Flüssigkristallanzeigevorrichtung gemäß Anspruch 1, die mindestens eine Verbindung, welche aus der Gruppe der durch Formel (1-1) bis Formel (1-3), Formel (1-5) bis Formel (1-7) und Formel (1-9) bis Formel (1-18) wiedergegebenen Verbindungen ausgewählt ist, als den ersten Bestandteil der Flüssigkristallzusammensetzung aufweist:

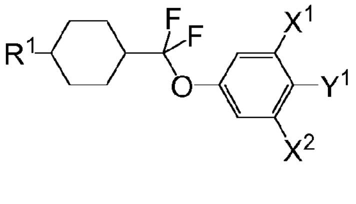

(1-1)

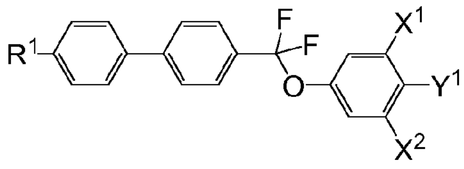

(1-2)

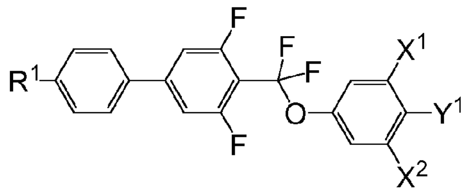

(1-3)

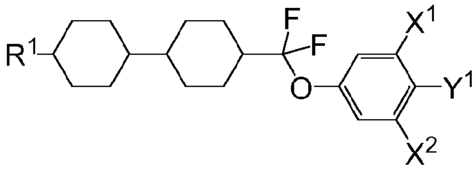

(1-5)

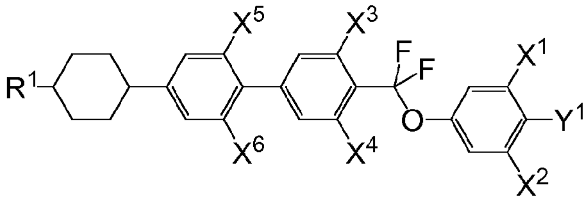

(1-6)

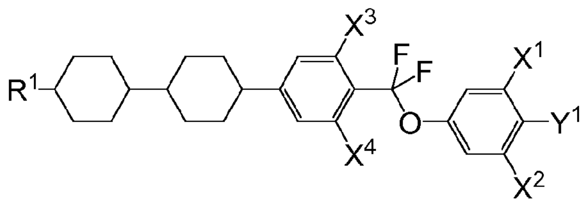

(1-7)

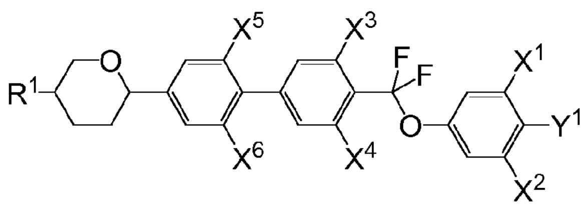

(1-9)

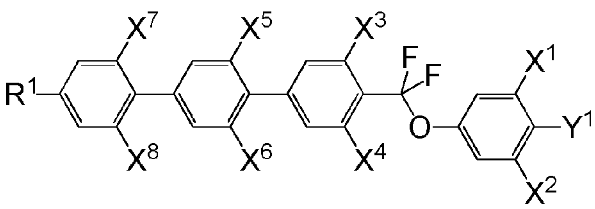

(1-10)

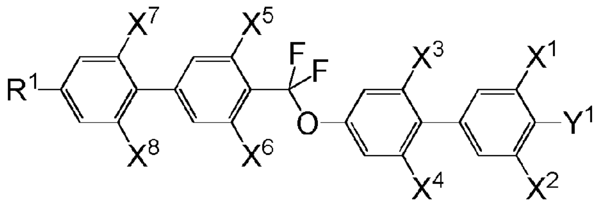

(1-11)

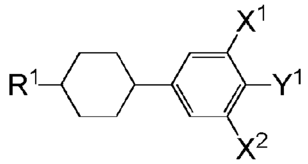

(1-12)

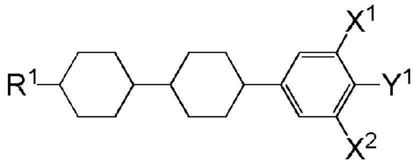

(1-13)

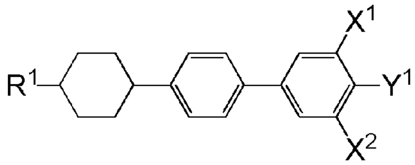

(1-14)

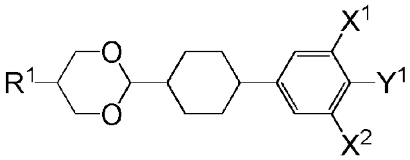

(1-15)

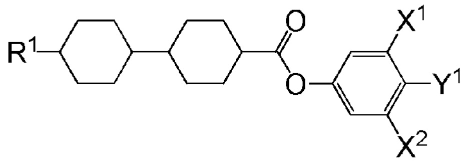

(1-16)

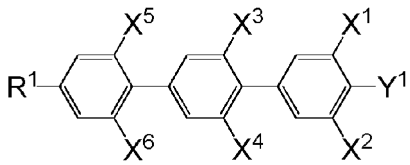

(1-17)

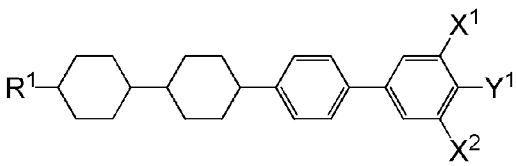

(1-18)

wobei $R^1$ Alkyl mit 1 bis 12 Kohlenstoffen, Alkoxy mit 1 bis 12 Kohlenstoffen oder Alkenyl mit 2 bis 12 Kohlenstoffen

ist; $X^1$, $X^2$, $X^3$, $X^4$, $X^5$, $X^6$, $X^7$ und $X^8$ unabhängig Wasserstoff oder Fluor sind und $Y^1$ Fluor, Chlor, Trifluormethyl oder Trifluormethoxy ist.

**3.** Flüssigkristallanzeigevorrichtung gemäß Anspruch 1 oder 2, die mindestens eine Verbindung, welche aus der Gruppe der durch Formel (1-10) gemäß Anspruch 2 wiedergegebenen Verbindungen ausgewählt ist, als den ersten Bestandteil der Flüssigkristallzusammensetzung aufweist.

**4.** Flüssigkristallanzeigevorrichtung gemäß einem der Ansprüche 1 bis 3, die mindestens eine Verbindung, welche aus der Gruppe der durch Formel (2-1) bis Formel (2-19) wiedergegebenen Verbindungen ausgewählt ist, als den zweiten Bestandteil der Flüssigkristallzusammensetzung aufweist:

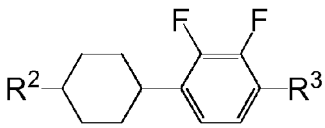
(2-1)

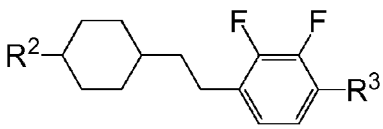
(2-2)

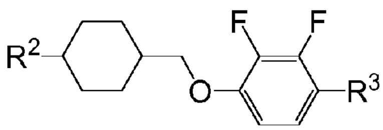
(2-3)

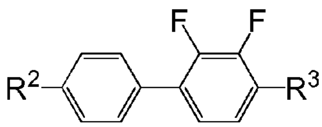
(2-4)

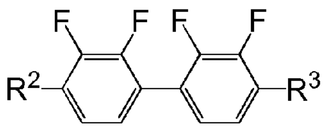
(2-5)

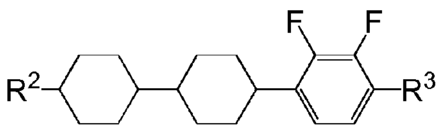
(2-6)

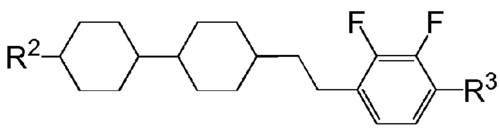
(2-7)

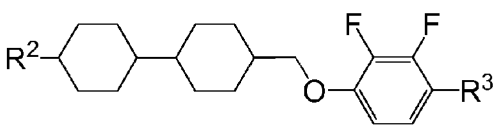
(2-8)

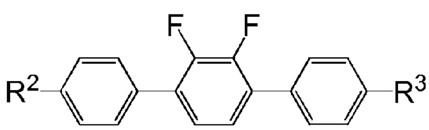
(2-9)

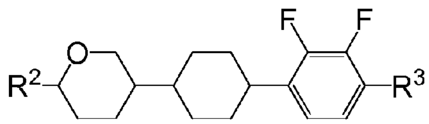

(2-10)

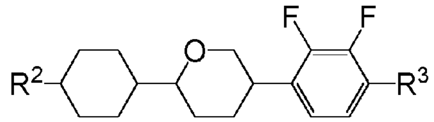

(2-11)

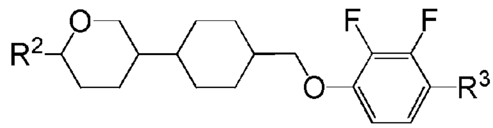

(2-12)

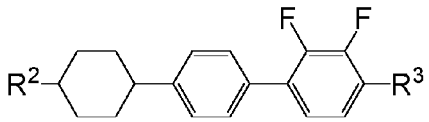

(2-13)

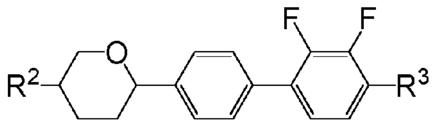

(2-14)

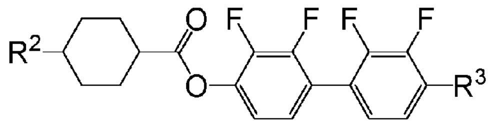

(2-15)

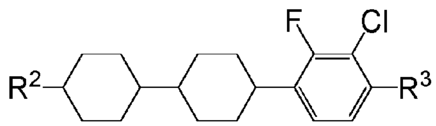

(2-16)

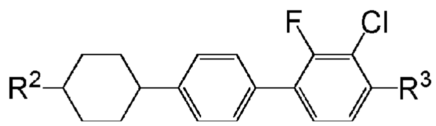

(2-17)

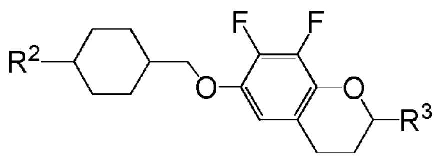

(2-18)

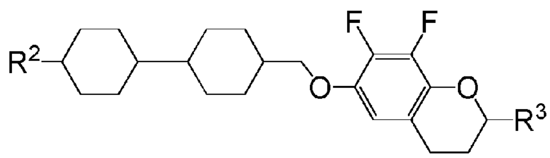

(2-19)

wobei $R^2$ und $R^3$ unabhängig Alkyl mit 1 bis 12 Kohlenstoffen, Alkoxy mit 1 bis 12 Kohlenstoffen, Alkenyl mit 2 bis 12 Kohlenstoffen oder Alkenyloxy mit 2 bis 12 Kohlenstoffen sind.

**5.** Flüssigkristallanzeigevorrichtung gemäß einem der Ansprüche 1 bis 4, wobei die Flüssigkristallzusammensetzung einen Anteil des ersten Bestandteils im Bereich von 5% nach Gewicht bis 95% nach Gewicht und einen Anteil des zweiten Bestandteils im Bereich von 5% nach Gewicht bis 50% nach Gewicht auf Basis des Gesamtgewichts der

Flüssigkristallzusammensetzung hat.

**6.** Flüssigkristallanzeigevorrichtung gemäß einem der Ansprüche 1 bis 5, die ferner mindestens eine Verbindung, welche aus der Gruppe der durch Formel (3) wiedergegebenen Verbindungen ausgewählt ist, als einen dritten Bestandteil der Flüssigkristallzusammensetzung aufweist:

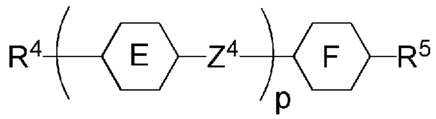
(3)

wobei $R^4$ und $R^5$ unabhängig Alkyl mit 1 bis 12 Kohlenstoffen, Alkoxy mit 1 bis 12 Kohlenstoffen, Alkenyl mit 2 bis 12 Kohlenstoffen oder Alkenyl mit 2 bis 12 Kohlenstoffen, in dem mindestens einer der Wasserstoffe durch Fluor ersetzt ist, sind; Ring E und Ring F unabhängig 1,4-Cyclohexylen, 1,4-Phenylen, 2-Fluor-1,4-phenylen, 3-Fluor-1,4-phenylen oder 2,5-Difluor-1,4-phenylen sind; $Z^4$ eine Einfachbindung, Ethylen oder Carbonyloxy ist und p = 1, 2 oder 3 ist.

**7.** Flüssigkristallanzeigevorrichtung gemäß einem der Ansprüche 1 bis 6, die mindestens eine Verbindung, welche aus der Gruppe der durch Formel (3-1) bis Formel (3-13) wiedergegebenen Verbindungen ausgewählt ist, als den dritten Bestandteil der Flüssigkristallzusammensetzung aufweist:

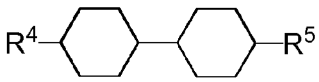
(3-1)

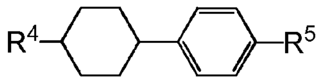
(3-2)

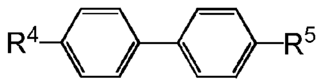
(3-3)

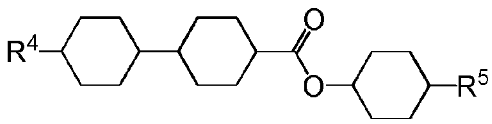
(3-4)

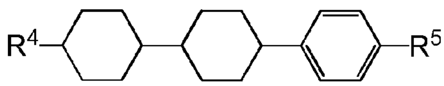
(3-5)

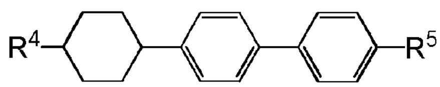
(3-6)

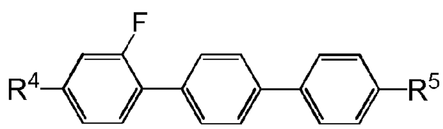
(3-7)

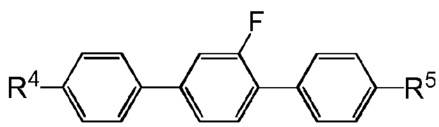
(3-8)

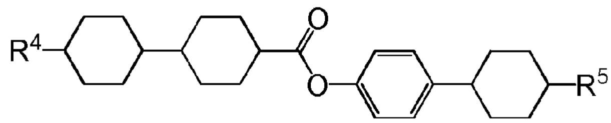

(3-9)

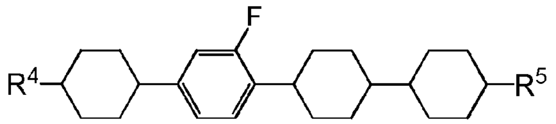

(3-10)

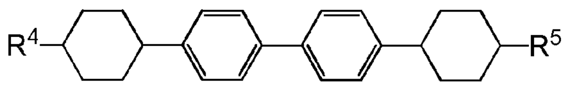

(3-11)

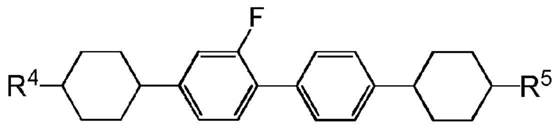

(3-12)

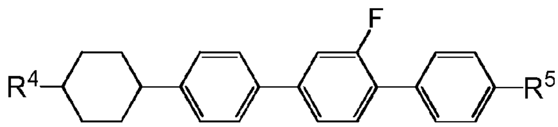

(3-13)

wobei $R^4$ und $R^5$ unabhängig Alkyl mit 1 bis 12 Kohlenstoffen, Alkoxy mit 1 bis 12 Kohlenstoffen, Alkenyl mit 2 bis 12 Kohlenstoffen oder Alkenyl mit 2 bis 12 Kohlenstoffen, in dem mindestens einer der Wasserstoffe durch Fluor ersetzt ist, sind.

**8.** Flüssigkristallanzeigevorrichtung gemäß Anspruch 6 oder 7, wobei die Flüssigkristallzusammensetzung einen Anteil des dritten Bestandteils im Bereich von 10% nach Gewicht bis 90% nach Gewicht auf Basis des Gesamtgewichts der Flüssigkristallzusammensetzung hat.

**9.** Flüssigkristallanzeigevorrichtung gemäß einem der Ansprüche 1 bis 8, wobei ein Betriebsmodus der Flüssigkristallanzeigevorrichtung einen FFS-Modus aufweist und ein Ansteuerungsmodus der Flüssigkristallanzeigevorrichtung einen Aktivmatrixmodus aufweist.

**10.** Flüssigkristallanzeigevorrichtung gemäß einem der Ansprüche 1 bis 9, wobei der Betriebsmodus der Flüssigkristallanzeigevorrichtung einen TN-Modus, einen ECB-Modus, einen OCB-Modus, einen IPS-Modus, einen PSA-Modus oder einen FPA-Modus aufweist und der Ansteuerungsmodus der Flüssigkristallanzeigevorrichtung einen Aktivmatrixmodus aufweist.

**11.** Flüssigkristallzusammensetzung, die in der Flüssigkristallanzeigevorrichtung gemäß einem der Ansprüche 1 bis 10 enthalten ist.

**12.** Flüssigkristallzusammensetzung gemäß Anspruch 11, wobei eine Maximaltemperatur einer nematischen Phase 70°C oder mehr ist, eine optische Anisotropie, die (bei 25°C) bei einer Wellenlänge von 589 Nanometern gemessen ist, 0,07 oder mehr beträgt und eine dielektrische Anisotropie, die (bei 25°C) bei einer Frequenz von 1 kHz gemessen ist, 2 oder mehr beträgt.

**13.** Flüssigkristallzusammensetzung gemäß Anspruch 11 oder 12, wobei eine dielektrische Konstante, die (bei 25°C) bei einer Frequenz von 1 kHz in einer Nebenachsenrichtung der Flüssigkristallmoleküle gemessen ist, 3,5 oder mehr beträgt.

**14.** Verwendung der Flüssigkristallzusammensetzung gemäß einem der Ansprüche 11 bis 13 in einer Flüssigkristallanzeigevorrichtung.

## Revendications

1. Elément d'affichage à cristaux liquides comprenant une paire de substrats dont au moins un est transparent et ayant une couche d'alignement incluant une composition de cristaux liquides ayant une anisotropie diélectrique positive lorsqu'elle est interposée entre les substrats, une plaque de polarisation et des électrodes transparentes, dans lequel la composition de cristaux liquides contient au moins un composé sélectionné dans le groupe de composés représentés par la formule (1) comme premier composant, et au moins un composé sélectionné dans le groupe de composés représentés par la formule (2) comme second composant, dans lequel le premier composant contient au moins un composé sélectionné dans le groupe de composés représentés par la formule (1-4) et la formule (1-8) :

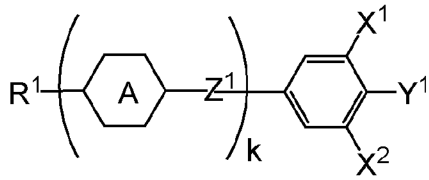

(1)

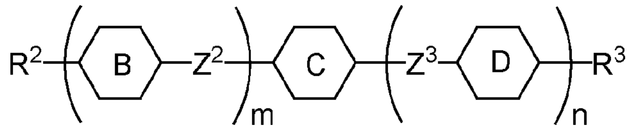

(2)

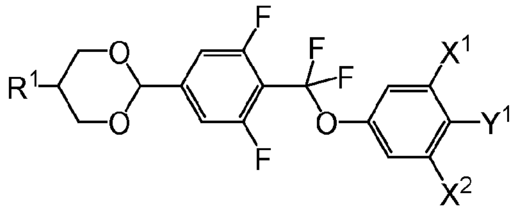

(1-4)

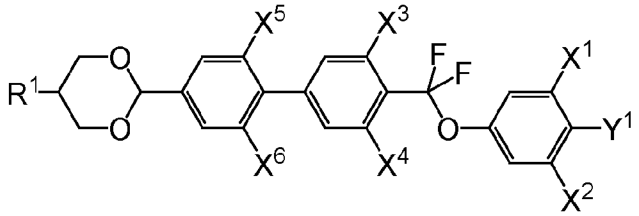

(1-8)

dans lequel, $R^1$ est un alkyle ayant de 1 à 12 carbones, un alkoxy ayant de 1 à 12 carbones ou un alkényle ayant de 2 à 12 carbones ; $R^2$ et $R^3$ sont de façon indépendante un alkyle ayant de 1 à 12 carbones, un alkoxy ayant de 1 à 12 carbones, un alkényle ayant de 2 à 12 carbones ou un alkényloxy ayant de 2 à 12 carbones ; l'anneau A est le 1,4-cyclohexylène, le 1,4-phénylène, le 2-fluoro-1,4-phénylène, le 3-fluoro-1,4-phénylène, le 3,5-difluoro-1,4-phénylène, la pyrimidine-2,5-diyl, le 1,3-dioxane-2,5-diyl ou le tétrahydropyrane-2,5-diyl ; l'anneau B et l'anneau D sont de façon indépendante le 1,4-cyclohexylène, le tétrahydropyrane-2,5-diyl, le 1,4-phénylène ou le 1,4-phénylène dans lequel au moins un hydrogène est remplacé par le fluor ou le chlore ; l'anneau C est le 2,3-difluoro-1,4-phénylène, le 2-chloro-3-fluoro-1,4-phénylène, le 2,3-difluoro-5-méthyl-1,4-phénylène, le 3, 4, 5-trifluoronaphtalène-2,6-diyl ou le 7,8-difluorochromane-2,-diyl ; $X^1$, $X^2$, $X^3$, $X^4$, $X^5$ et $X^6$ sont de façon indépendante l'hydrogène ou le fluor ; $Y^1$ est le fluor, le chlore, le trifluorométhyle ou le trifluorométhoxy ; $Z^1$ est une liaison unique, l'éthylène, le carbonyloxy ou le difluorométhyleneoxy ; $Z^2$ et $Z^3$ sont de façon indépendante une liaison unique, l'éthylène, le méthyleneoxy ou le carbonyloxy ; k est 1, 2 ou 3 ; m est 1, 2 ou 3 ; et n est 0 ou 1, et une somme de m et n est 3 ou moins.

2. Elément d'affichage à cristaux liquides selon la revendication 1, y compris au moins un composé sélectionné dans le groupe de composés représentés par la formule (1-1) à la formule (1-3), la formule (1-5) à la formule (1-7) et la formule (1-9) à la formule (1-18) comme premier composant de la composition de cristaux liquides :

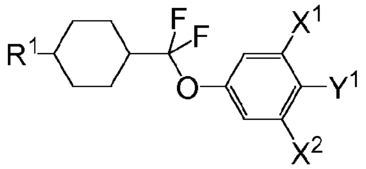
(1-1)

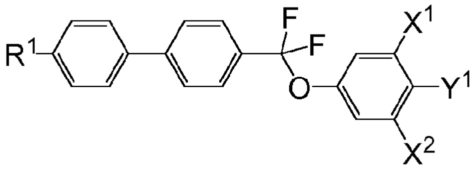
(1-2)

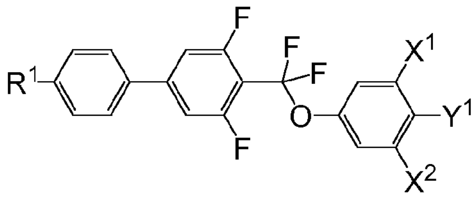
(1-3)

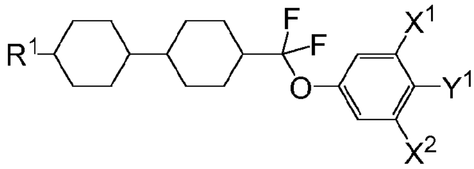
(1-5)

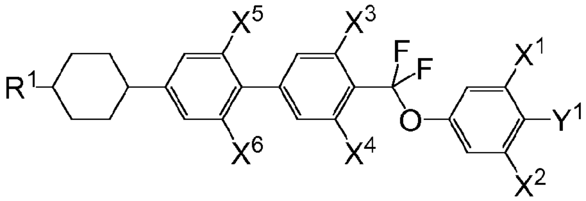
(1-6)

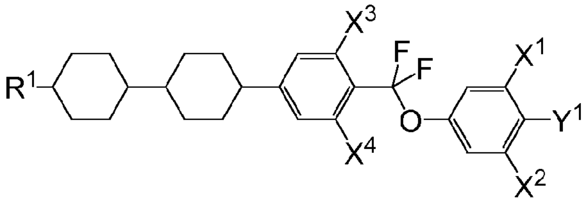
(1-7)

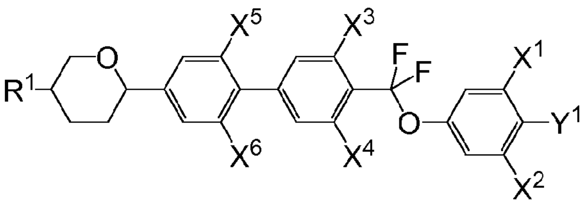
(1-9)

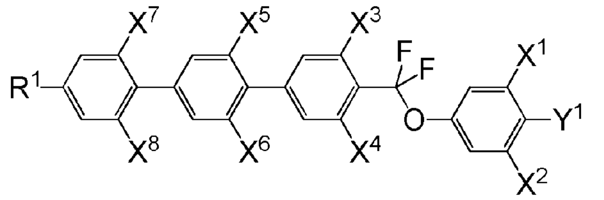

(1-10)

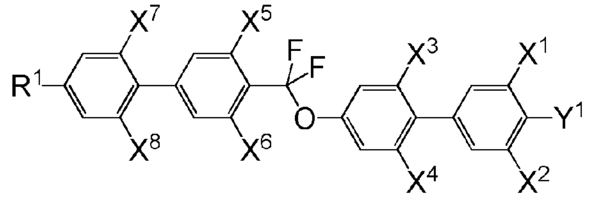

(1-11)

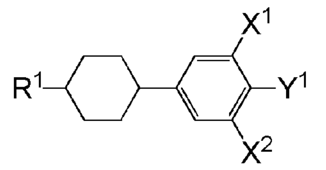

(1-12)

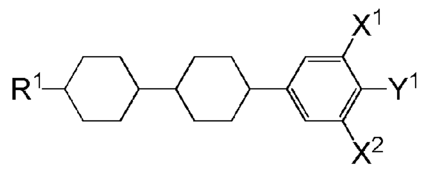

(1-13)

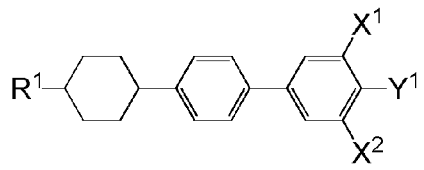

(1-14)

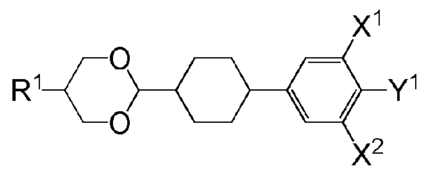

(1-15)

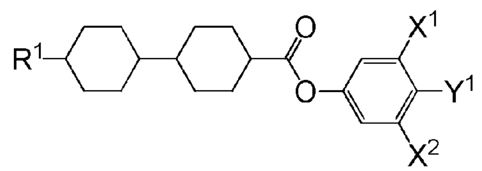

(1-16)

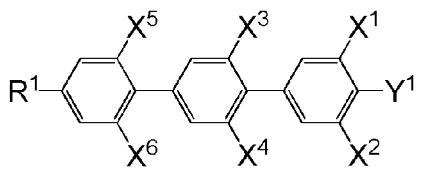

(1-17)

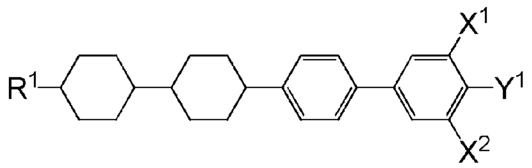

(1-18)

dans lequel $R^1$ est un alkyle ayant de 1 à 12 carbones, un alkoxy ayant de 1 à 12 carbones ou l'alkényle ayant de 2 à 12 carbones ; $X^1$, $X^2$, $X^3$, $X^4$, $X^5$, $X^6$, $X^7$ et $X^8$ sont de façon indépendante l'hydrogène ou le fluor ; et $Y^1$ est le fluor, le chlore, le trifluorométhyle ou le trifluorométhoxy.

**3.** Elément d'affichage à cristaux liquides selon la revendication 1 ou 2, incluant au moins un composé sélectionné dans le groupe de composés représentés par la formule (1-10) selon la revendication 2 comme premier composant de la composition de cristaux liquides.

**4.** Elément d'affichage à cristaux liquides selon l'une quelconque des revendications 1 à 3, incluant au moins un composé sélectionné dans le groupe de composés représentés par la formule (2-1) à la formule (2-19) comme second composant de la composition de cristaux liquides :

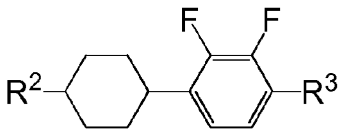

(2-1)

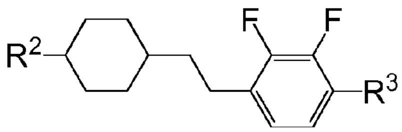

(2-2)

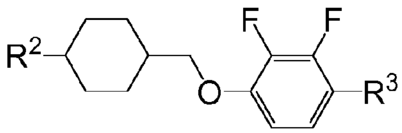

(2-3)

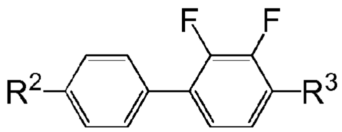

(2-4)

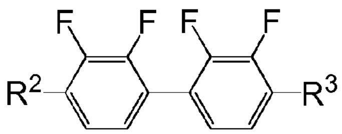

(2-5)

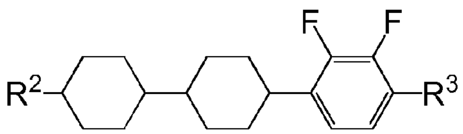

(2-6)

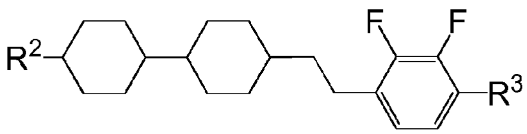

(2-7)

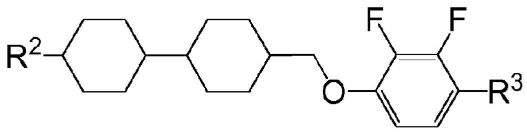

(2-8)

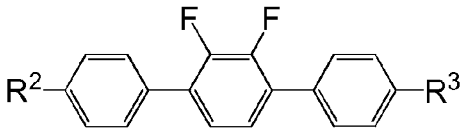

(2-9)

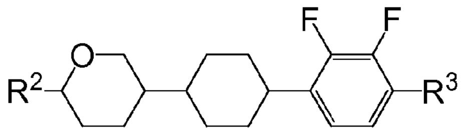

(2-10)

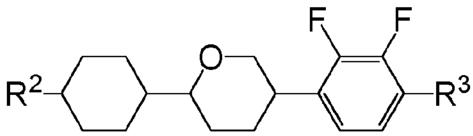

(2-11)

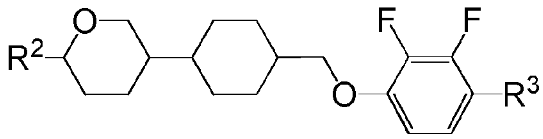

(2-12)

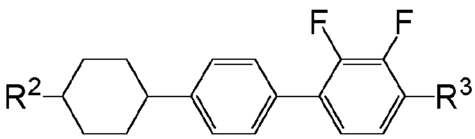

(2-13)

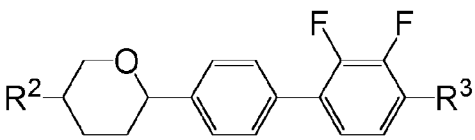

(2-14)

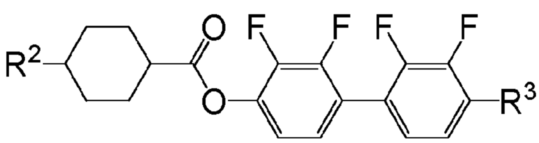

(2-15)

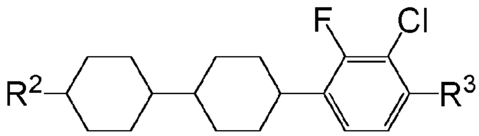

(2-16)

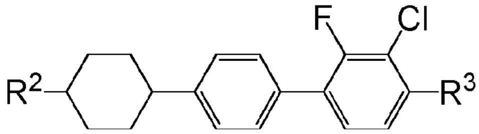

(2-17)

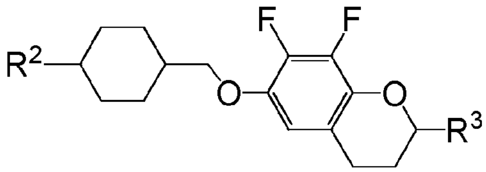

(2-18)

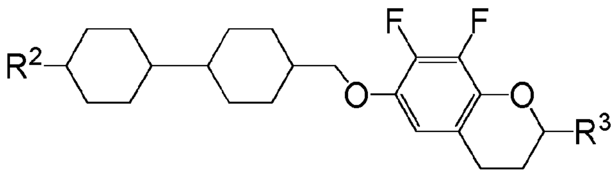

(2-19)

dans lequel $R^2$ et $R^3$ sont de façon indépendante un alkyle ayant de 1 à 12 carbones, un alkoxy ayant de 1 à 12 carbones, un alkényle ayant de 2 à 12 carbones ou un alkényloxy ayant de 2 à 12 carbones.

**5.** Elément d'affichage à cristaux liquides selon l'une quelconque des revendications 1 à 4, dans lequel la composition de cristaux liquides a un ratio du premier composant dans la plage de 5% en poids à 95% en poids et un ratio du second composant dans la plage de 5% en poids à 50% en poids, sur la base du poids total de la composition de cristaux liquides.

**6.** Elément d'affichage à cristaux liquides selon l'une quelconque des revendications 1 à 5, incluant en outre au moins un composé sélectionné dans le groupe de composés représentés par la formule (3) comme troisième composant de la composition de cristaux liquides :

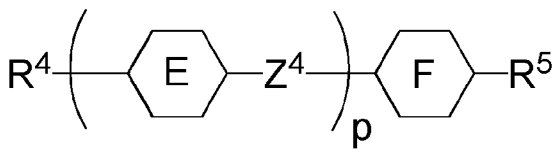

(3)

dans lequel $R^4$ et $R^5$ sont de façon indépendante un alkyle ayant de 1 à 12 carbones, un alkoxy ayant de 1 à 12 carbones, un alkényle ayant de 2 à 12 carbones, ou un alkényle ayant de 2 à 12 carbones dans lequel au moins l'un des hydrogènes est remplacé par le fluor ; l'anneau E et l'anneau F sont de façon indépendante le 1,4-cyclohexylène, le 1,4-phénylène, le 2-fluoro-1,4-phénylène, le 3-fluoro-1,4-phénylène ou le 2,5-difluoro-1,4-phénylène ; $Z^4$ est une liaison unique, l'éthylène ou le carbonyloxy ; et p est 1, 2 ou 3.

**7.** Elément d'affichage à cristaux liquides selon l'une quelconque des revendications 1 à 6, incluant au moins un composé sélectionné dans le groupe de composés représentés par la formule (3-1) à la formule (3-13) comme troisième composant de la composition de cristaux liquides :

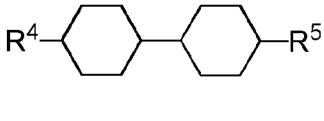

(3-1)

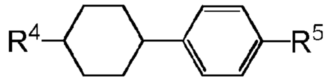
(3-2)

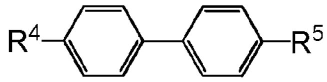
(3-3)

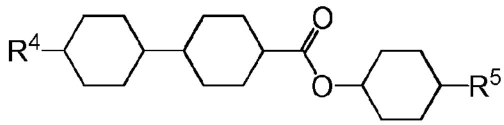
(3-4)

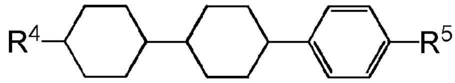
(3-5)

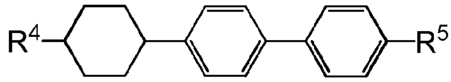
(3-6)

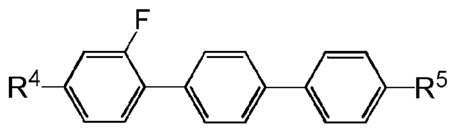
(3-7)

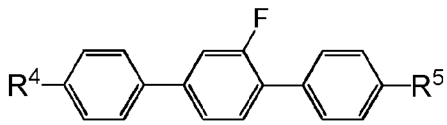
(3-8)

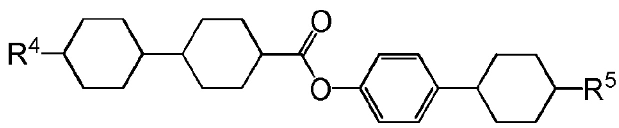
(3-9)

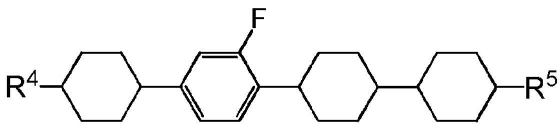
(3-10)

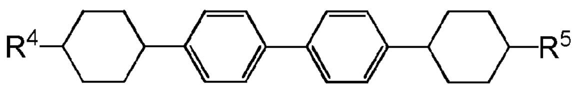
(3-11)

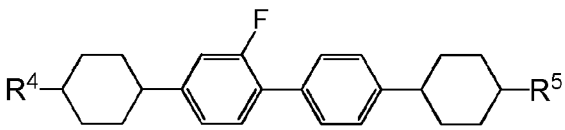
(3-12)

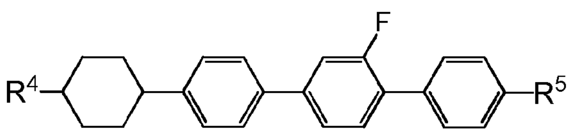
(3-13)

dans lequel $R^4$ et $R^5$ sont de façon indépendante un alkyle ayant de 1 à 12 carbones, un alkoxy ayant de 1 à 12

carbones, un alkényle ayant de 2 à 12 carbones ou un alkényle ayant de 2 à 12 carbones dans lequel au moins l'un des hydrogènes est remplacé par le fluor.

8. Elément d'affichage à cristaux liquides selon la revendication 6 ou 7, dans lequel la composition de cristaux liquides a un ratio du troisième composant dans la plage de 10% en poids à 90% en poids sur la base du poids total de la composition de cristaux liquides.

9. Elément d'affichage à cristaux liquides selon l'une quelconque des revendications 1 à 8, dans lequel un mode d'exploitation de l'élément d'affichage à cristaux liquides inclut un mode FFS, et un mode d'excitation de l'élément d'affichage à cristaux liquides inclut un mode de matrice active.

10. Elément d'affichage à cristaux liquides selon l'une quelconque des revendications 1 à 9, dans lequel le mode d'exploitation de l'élément d'affichage à cristaux liquides inclut un mode TN, un mode ECB, un mode OCB, un mode IPS, un mode PSA ou un mode FPA, et le mode d'excitation de l'élément d'affichage à cristaux liquides inclut un mode de matrice active.

11. Composition de cristaux liquides contenue dans l'élément d'affichage à cristaux liquides selon l'une quelconque des revendications 1 à 10.

12. Composition de cristaux liquides selon la revendication 11, dans laquelle une température maximale d'une phase nématique est de 70°C ou plus, une anisotropie optique mesurée (à 25°C) à une longueur d'onde de 589 nanomètre est de 0,07 ou plus et une anisotropie diélectrique mesurée (à 25°C) à une fréquence de 1 kHz est de 2 ou plus.

13. Composition de cristaux liquides selon la revendication 11 ou 12, dans laquelle une constante diélectrique mesurée (à 25°C) à une fréquence de 1 kHz dans une direction d'axe mineure des molécules de cristaux liquides est de 3,5 ou plus.

14. Utilisation de la composition de cristaux liquides selon l'une des revendications 11 à 13 dans un élément d'affichage à cristaux liquides.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000080370 A
- JP 2005163047 A
- EP 2628779 A2
- EP 2484658 A1
- WO 2010017868 A1
- US 2004055529 A1
- EP 2292720 A1
- US 6440506 B1
- WO 2008138643 A1
- WO 2004035710 A1
- JP 2002156619 A
- DE 102004006669 A1
- JP H10251186 A
- JP H2233626 A
- JP H2503441 A
- JP S59176221 A
- JP S57165328 A
- US 3660505 B


### Non-patent literature cited in the description


- books such as Organic Syntheses. John Wiley & Sons, Inc,
- Organic Reactions. John Wiley & Sons, Inc,
- Comprehensive Organic Synthesis. Pergamon Press
- New Experimental Chemistry Course (Shin Jikken Kagaku Koza in Japanese). Maruzen Co., Ltd,
- **M. IMAI et al.** Molecular Crystals and Liquid Crystals. 1995, vol. 259, 37
- Liquid Crystal Device Handbook'' (Ekisho Debaisu Handobukku. The Nikkan Kogyo Shimbun, Ltd, 75
- Handbook of Liquid Crystals (Ekisho Binran in Japanese). Maruzen Co., Ltd, 2000, 196